(19) Europäisches Patentamt
European Patent Office
Office européen des brevets

(11) EP 4 063 418 A1

(12) EUROPEAN PATENT APPLICATION

(43) Date of publication:
**28.09.2022 Bulletin 2022/39**

(21) Application number: **22164035.2**

(22) Date of filing: **24.03.2022**

(51) International Patent Classification (IPC):
***C08G 18/02*** (2006.01) ***C08G 18/08*** (2006.01)
***C08G 18/18*** (2006.01) ***C08G 18/28*** (2006.01)
***C08G 18/62*** (2006.01) ***C08G 18/73*** (2006.01)
***C08G 18/75*** (2006.01) ***C08G 18/79*** (2006.01)
***C08G 18/80*** (2006.01) ***C09D 175/04*** (2006.01)

(52) Cooperative Patent Classification (CPC):
**C08G 18/73; C08G 18/022; C08G 18/0828; C08G 18/1875; C08G 18/283; C08G 18/288; C08G 18/6225; C08G 18/755; C08G 18/792; C08G 18/8029; C08G 18/8064; C08G 18/8083; C09D 175/04**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.03.2021 JP 2021053442**

(71) Applicant: **Asahi Kasei Kabushiki Kaisha**
**Tokyo 1000006 (JP)**

(72) Inventors:
- **Li, Guan**
  **Tokyo, 100-0006 (JP)**
- **Fukuchi, Takashi**
  **Tokyo, 100-0006 (JP)**

(74) Representative: **Strehl Schübel-Hopf & Partner**
**Maximilianstrasse 54**
**80538 München (DE)**

# (54) POLYISOCYANATE COMPOSITION, COATING COMPOSITION AND COATED SUBSTRATE

(57) A polyisocyanate composition according to the present invention contains: a hydrophilic polyisocyanate compound (A) derived from both a polyisocyanate compound derived from at least one diisocyanate selected from the group consisting of aliphatic diisocyanates, alicyclic diisocyanates and aromatic diisocyanates and a hydrophilic compound; and a phosphite ester compound (B), wherein the amount of the phosphite ester compound (B) is 0.0001 parts by mass to 5.0 parts by mass relative to 100 parts by mass of the polyisocyanate compound.

EP 4 063 418 A1

## Description

TECHNICAL FIELD

The present invention relates to a polyisocyanate composition, a coating composition and a coated substrate.

BACKGROUND OF THE INVENTION

A coating film formed by a two-liquid type polyurethane composition including, as a curing agent, a polyisocyanate composition derived from an aliphatic diisocyanate or an alicyclic diisocyanate exhibits excellent properties in terms of weather resistance, chemical resistance, abrasion resistance, or the like, and thus has been used widely as a coating material, an ink, an adhesive, or the like. In recent years, there has been a strong awareness of global environmental issues and aqueous two-liquid type polyurethane compositions in which no organic solvent is contained or the amount of an organic solvent is decreased have been proposed. However, in the case of an aqueous two-liquid type polyurethane composition, there are problems such as less water-dispersibility, higher reactivity with water, or shorter pot life, in comparison with a solvent-based two-liquid type polyurethane composition, due to the constitution of the composition. Therefore, there is a demand for a polyisocyanate composition having high water-dispersibility, while suppressing the reactivity of isocyanate groups with water when dispersed in water.
A polyisocyanate compound having water-dispersibility and an aqueous two-liquid type polyurethane composition using the same have been proposed in Patent Document 1 and Patent Document 2, for example. Polyisocyanate compositions having modified polyisocyanates obtained by reacting polyisocyanates with amine salts of sulfonic acid having a hydroxyl group have been proposed in Patent Document 3 and Patent Document 4. A hydrophilic polyisocyanate used together with a peroxide decomposer and having a low color number has been proposed in Patent Document 5.

DOCUMENTS OF RELATED ART

Patent Documents

Patent Document 1: Japanese Patent Application Laid-Open Publication No. Hei 05-222150

Patent Document 2: Japanese Patent Application Laid-Open Publication No. Hei 09-328654

Patent Document 3: Japanese Patent Application Laid-Open Publication No. 2015-205957

Patent Document 4: Japanese Patent Application Laid-Open Publication No. 2016-017157

Patent Document 5: Japanese Patent Application Laid-Open Publication No. 2019-189866

SUMMARY OF THE INVENTION

PROBLEMS TO BE SOLVED BY THE INVENTION

However, the composition disclosed in Patent Document 1 or Patent Document 2 has a problem in terms of a low hardness of the resultant coating film. Although Patent Document 3 and Patent Document 4 disclose that the dispersibility in water is improved by using a polyisocyanate containing a sulfonic acid group, there is a problem in terms of turbidity generating in the synthesized polyisocyanate due to less compatibility between the sulfonic acid group and the polyisocyanate. In addition, Patent Document 5 discloses that a modified polyisocyante obtained by a reaction with an amino sulfonic acid having a specific structure improves the hardness of a coating film or the solvent-resistance of a coating film. However, the use of the amino sulfonic acid having a specific structure causes a problem in terms of deterioration of the water-resistance of the coating film.
An aqueous two-liquid type polyurethane composition is used as a coating material for furnitures, architectural materials, lumber for houses, wood floors for houses or school facilities, trains, construction equipment, agricultural vehicles, or the like. Accordingly, a polyisocyanate composition having excellent transparency, low coloring, excellent pot life when made into a coating composition, and excellent hardness and water-resistance when made into a coating film is needed as a curing agent of an aqueous two-liquid type polyurethane composition.
The present invention has been completed in light of the above-mentioned circumstances, and aims to provide

a polyisocyanate composition having high transparency, low coloring, excellent pot life when made into a coating composition, and excellent hardness and water resistance when made into a coating film.

MEANS TO SOLVE THE PROBLEMS

The present invention includes the following aspects.

(1) A polyisocyanate composition containing:

a hydrophilic polyisocyanate compound (A) derived from both a polyisocyanate compound derived from at least one diisocyanate selected from the group consisting of aliphatic diisocyanates, alicyclic diisocyanates and aromatic diisocyanates and a hydrophilic compound; and
a phosphite ester compound (B),
wherein the amount of the phosphite ester compound (B) is 0.0001 parts by mass to 5.0 parts by mass relative to 100 parts by mass of the polyisocyanate compound.

(2) The polyisocyanate composition according to (1) mentioned above, wherein the phosphite ester compound (B) is a compound of the following general formula (1).

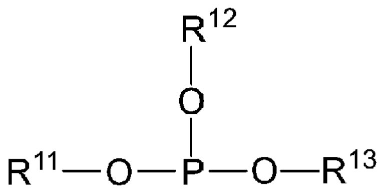

( I )

(In the general formula (1), $R^{11}$, $R^{12}$ and $R^{13}$ are each independently a C1-20 alkyl group or a C6-10 aryl group.)
(3) The polyisocyanate composition according to (1) or (2) mentioned above, further containing an acidic phosphoric acid ester compound.
(4) The polyisocyanate composition according to (3) mentioned above, wherein the acidic phosphoric acid ester compound is a compound of the following general formula (II).

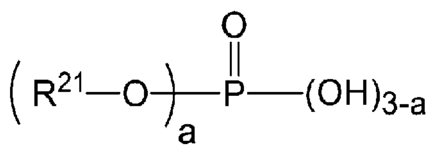

( I I )

(In the general formula (11), $R^{21}$ is a C1-20 alkyl group or a C6-10 aryl group. a is 1 to 2.)
(5) The polyisocyanate composition according to (3) or (4) mentioned above, wherein the amount of the acidic phosphoric acid ester compound is 0.0001 parts by mass to 5.0 parts by mass relative to 100 parts by mass of the polyisocyanate compound.
(6) The polyisocyanate composition according to any one of (1) to (5) mentioned above, wherein the hydrophilic compound is at least one compound selected from the group consisting of anionic compounds, cationic compounds and nonionic compounds.
(7) The polyisocyanate composition according to (6) mentioned above, wherein the hydrophilic compound contains the anionic compound, and the anionic compound is at least one compound selected from the group consisting of carboxylic acid group-containing compounds, phosphoric acid group-containing compounds and sulfonic acid group-containing compounds.
(8) The polyisocyanate composition according to (7) mentioned above, wherein the anionic compound contains the sulfonic acid group-containing compound, and the sulfonic acid group-containing compound is a sulfonic acid having an active hydrogen group.
(9) The polyisocyanate composition according to (8) mentioned above, wherein the active hydrogen group is a hydroxyl group.
(10) The polyisocyanate composition according to (8) or (9) mentioned above, wherein the sulfonic acid having an active hydrogen group is a compound of the following general formula (III).

$$HO—R^{31}—SO_3H \quad (III)$$

(In the general formula (III), $R^{31}$ is a C1-10 hydrocarbon group which may have at least one selected from the group consisting of an ether linkage, an ester linkage, a carbonyl group and an imino group. $R^{31}$ may have a ring structure. The ring structure is an aromatic ring, a 5- or 6-membered ring having two nitrogen atoms or a 5- or 6-membered ring having both a nitrogen atom and an oxygen atom.)

(11) The polyisocyanate composition according to any one of (7) to (10) mentioned above, wherein a carboxylic acid group, a phosphoric acid group or a sulfonic acid group of the anionic compound is neutralized with an inorganic base or an organic amine compound.

(12) The polyisocyanate composition according to (6) mentioned above, wherein the hydrophilic compound contains the nonionic compound, and the nonionic compound is a polyalkylene glycol alkyl ether having a structure of the following general formula (IV).

$$HO—(R^{41}O)_n—R^{42} \quad (IV)$$

(In general formula (IV), $R^{41}$ is a C1-4 alkylene group, $R^{42}$ is a C1-4 alkyl group, and n is 4.0 to 20.)

(13) Use of the polyisocyanate composition of any one of (1) to (12) as a curing agent of a polyurethane resin composition.

(14) A coating composition containing the polyisocyanate composition of any one of (1) to (12) mentioned above.

(15) A coated substrate coated with the coating composition of (14) mentioned above.

(16) A preparation method of the polyisocyanate composition of any one of (1) to (12) mentioned above, including:

a step (1) in which a polyisocyanate compound derived from at least one diisocyanate selected from the group consisting of aliphatic diisocyanates, alicyclic diisocyanates and aromatic diisocyanates and a hydrophilic compound are reacted in the presence of a phosphite ester compound (B) to obtain a hydrophilic polyisocyanate compound (A), or

a step (2) in which a polyisocyanate compound derived from at least one diisocyanate selected from the group consisting of aliphatic diisocyanates, alicyclic diisocyanates and aromatic diisocyanates and a hydrophilic compound are reacted to obtain a hydrophilic polyisocyanate compound (A), followed by mixing the hydrophilic polyisocyanate compound (A) with a phosphite ester compound (B),

wherein no step in which an acidic group derived from the hydrophilic compound is neutralized is conducted after the polyisocyanate compound and the hydrophilic compound are reacted in the step (1) or (2).

EFFECTS OF THE INVENTION

The present invention makes it possible to provide a polyisocyanate composition having high transparency, low coloring, excellent pot life when made into a coating composition, and excellent hardness and water-resistance when made into a coating film. A coating composition according to the present invention contains the polyisocyanate composition, has excellent pot life, and exhibits excellent hardness and water-resistance when made into a coating film. A coated substrate according to the present invention has a coating film formed by curing the coating composition, and the coating film exhibits excellent hardness and water resistance.

EMBODIMENTS FOR CARRYING OUT THE INVENTION

An embodiment in which the present invention is carried out (hereinafter, abbreviated as "present embodiment") will be described specifically below. The present invention is not intended to be limited to the following present embodiment. The present invention may be modified appropriately within the summary thereof.

«Polyisocyanate composition»

A polyisocyanate composition of the present embodiment contains: a hydrophilic polyisocyanate compound (A); and a phosphite ester compound (B).

The hydrophilic polyisocyanate compound (A) is derived from both a polyisocyanate compound derived from

at least one diisocyanate selected from the group consisting of aliphatic diisocyanates, alicyclic diisocyanates and aromatic diisocyanates, and a hydrophilic compound.

The amount of the phosphite ester compound (B) is 0.0001 parts by mass to 5.0 parts by mass relative to 100 parts by mass of the polyisocyanate compound.

The phosphite ester compound (B) is preferably a compound of the following general formula (I).

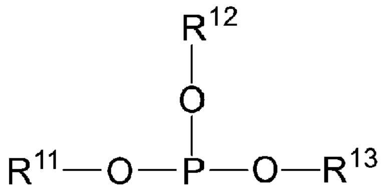

( I )

In the general formula (I), $R^{11}$, $R^{12}$ and $R^{13}$ are each independently a C1-20 alkyl group or a C6-10 aryl group.

Since the polyisocyanate composition of the present embodiment has the above-mentioned constitution, the polyisocyanate composition has high transparency and low coloring, exhibits excellent pot life when made into a coating composition, and excellent hardness and water-resistance when made into a coating film, as shown in examples below. Since such effects are exhibited, the polyisocyanate composition of the present embodiment is preferably used as a curing agent of an aqueous two-liquid type polyurethane composition.

The constituent components of the polyisocyanate composition of the present embodiment will be explained particularly below.

<Polyisocyanate composition>

The polyisocyanate composition of the present embodiment contains a hydrophilic polyisocyanate compound (A) and a phosphite ester compound (B).

The hydrophilic polyisocyanate compound (A) is derived from both a diisocyanate compound and a hydrophilic compound, and has hydrophilic groups introduced by bonding at least partial isocyanate groups with functional groups of the hydrophilic compound. Therefore, the polyisocyanate composition can realize favorable water-dispersibility.

The polyisocyanate composition of the present embodiment generally contains, as an isocyanate component, an unreacted polyisocyanate, that is, a polyisocyanate in which no hydrophilic group is introduced in the molecule thereof. The below-mentioned properties of the polyisocyanate composition of the present embodiment are properties in the state in which both a polyisocyanate having a hydrophilic group introduced in the molecule thereof and an unreacted polyisocyanate (polyisocyanate having no hydrophilic group introduced in the molecule thereof) are contained, unless otherwise specified.

The content ratio of the hydrophilic group in the polyisocyanate composition of the present embodiment is preferably 1 % by mass to 60% by mass, more preferably 1% by mass to 50% by mass, even more preferably 1 % by mass to 40% by mass, and particularly preferably 1 % by mass to 30% by mass, relative to the total mass of the polyisocyanate composition. In the case where the content ratio of the hydrophilic group is the upper limit or less, the curability when used as a curing agent of an aqueous two-liquid type polyurethane composition can be further improved. In the case where the content ratio of the hydrophilic group is the lower limit or more, the dispersibility when dispersed in water or the main agent containing water becomes favorable.

The content ratio of the hydrophilic group can be measured by liquid chromatography (LC).

<Measurement method of the content ratio of the hydrophilic group>

The content ratio of the hydrophilic group relative to 100 mol of isocyanate groups of a raw material polyisocyanate is defined by the ratio of isocyanate groups having introduced hydrophilic groups in a molecule thereof. Specifically, the content ratio of the hydrophilic group is determined using a polyisocyanate composition as a sample from the peak area ratio of unmodified isocyanurate trimers, mono-modified isocyanurate trimers, double-modified isocyanurate trimers, and triple-modified isocyanurate trimers at 220 nm by liquid chromatography (LC).

[Polyisocyanate compound]

A polyisocyanate compound used as a raw material of the hydrophilic polyisocyanate compound (A) is derived from at least one diisocyanate selected from the group consisting of aliphatic diisocyanates, alicyclic diisocyanates and aromatic diisocyanates. Namely, the polyisocyanate compound is a reactant of the diisocyanates.

Although the aliphatic diisocyanates are not particularly limited, examples thereof include 1,4-diisocyanatobutane, 1,5-diisocyanatopentane, ethyl (2,6-diisocyanato) hexanoate, 1,6-diisocyanatohexane (hereinafter, may be referred to as "HDI"), 1,9-diisocyanatononane, 1,12-diisocyanatododecane, and 2,2,4- or 2,4,4-trimethyl-1,6-diisocyanatohexane.

Although the alicyclic diisocyanates are not particularly limited, examples thereof include 1,3- or 1,4-bis (isocyanatomethyl) cyclohexane (hereinafter, may be referred to as "hydrogenated XDI"), 1,3- or 1,4-diisocyanatocyclohexane, 3,5,5-trimethyl 1-isocyanato-3-(isocyanatomethyl) cyclohexane (hereinafter, may be referred to as "IPDI"), 4-4'-diisocyanato-dicyclohexylmethane (hereinafter, may be referred to as "hydrogenated MDI"), and 2,5- or 2,6-diisocyanatomethylnorbornane.

Although the aromatic diisocyanates are not particularly limited, examples thereof include xylylene diisocyanate, tolylene diisocyanate, and diphenylmethane diisocyanate.

Among them, HDI, IPDI, hydrogenated XDI or hydrogenated MDI is preferable, and HDI or IPDI is more preferable, from the viewpoint of pot life.

Although the polyisocyanate derived from the above-mentioned diisocyanate is not particularly limited, examples thereof include polyisocyanate compounds shown in the following (a) to (h).

(a) A polyisocyanate compound having an uretdione group obtained by cyclizing and dimerizing two isocyanate groups.
(b) A polyisocyanate compound having an isocyanurate group or an iminooxadiazinedione group obtained by cyclizing and trimerizing three isocyanate groups.
(c) A polyisocyanate compound having a biuret group obtained by reacting three isocyanate groups with one molecule of water.
(d) A polyisocyanate compound having an oxadiazinetrione group obtained by reacting two isocyanate groups with one molecule of carbon dioxide.
(e) A polyisocyanate compound having a urethane group obtained by reacting one isocyanate group with one hydroxyl group.
(f) A polyisocyanate compound having an allophanate group obtained by reacting two isocyanate groups with one hydroxyl group.
(g) A polyisocyanate compound having an acylurea group obtained by reacting one isocyanate group with one carboxy group.
(h) A polyisocyanate compound having a urea group obtained by reacting one isocyanate group with one primary or secondary amine.

Among them, the polyisocyanate compound having a biuret group, an isocyanurate group, a urethane group, an uretdione group, or an allophanate group in the molecule thereof is preferable.

As the polyisocyanate compound, a polyisocyanate compound derived from an aliphatic triisocyanate may be contained. Examples of the aliphatic triisocyanate include 1,3,6-triisocyanatohexane, 1,8-diisocyanato-4-isocyanatomethyloctane, 2-isocyanatoethyl-2,6-diisocyanato-hexanoate.

One type of the above-mentioned polyisocyanate compound may be used alone, or at least two thereof may be used in combination.

(Preparation method of polyisocyanate compound)

Although a preparation method of a polyisocyanate compound containing an isocyanurate group is not particularly limited, examples thereof include a method in which an isocyanurate-forming reaction of diisocyanates is conducted using a catalyst or the like, and then terminated when a predetermined conversion rate is obtained, followed by removing unreacted diisocyanates.

Although the catalyst used in the isocyanurate-forming reaction is not particularly limited, basic catalysts are preferable, and specific examples thereof include: hydroxides or organic weak acid salts of tetraalkylammoniums; hydroxides or organic weak acid salts of hydroxyalkylammoniums; alkali metal salts of alkylcarboxylic acids; metal alkolates; aminosilyl group-containing compounds; Mannich bases; mixtures of tertiary amines and epoxy compounds; and phosphoric compounds.

Examples of the tetraalkylammoniums include tetramethylammonium and tetraethylammonium.

Examples of organic acids include acetic acid and capric acid.

Examples of the hydroxyalkylammoniums include trimethylhydroxypropylammonium, trimethylhydroxyethylammonium, triethylhydroxypropylammonium, and triethylhydroxyethylammonium.

Examples of the alkylcarboxylic acids include acetic acid, caproic acid, octylic acid, and myristic acid

Examples of metals constituting the alkali metal salts include tin, zinc, and lead.

Examples of the metal alkolates include sodium alkolate and potassium alkolate.

Examples of the aminosilyl group-containing compounds include hexamethyldisilazane.

Examples of the phosphoric compounds include tributylphosphine.

The amount of such a catalyst to be used is preferably 10 ppm by mass to 1.0% by mass relative to the total mass of raw material diisocyanates (and alcohol, as needed). The catalyst may be inactivated to terminate the isocyanurate-forming reaction by adding an acidic substance to neutralize the catalyst, or by conducting thermal decomposition or chemical decomposition. Examples of the acidic substance to neutralize the catalyst include phosphoric acid, and acidic phosphoric acid ester.

The yield of the polyisocyanate compound tends to be generally 10% by mass to 70% by mass. An increase in the yield of the resultant polyisocyanate compound tends to enhance the viscosity thereof. The yield can be calculated from the mass ratio of the resultant polyisocyanate compound to the total mass of raw material components.

Although the reaction temperature of the isocyanurate-forming reaction is not particularly limited, the reaction temperature is preferably 50°C to 200°C, and more preferably 50°C to 150°C. In the case where the reaction temperature is the above-mentioned lower limit or more, the reaction tends to proceed readily. In the case where the reaction temperature is the above-mentioned upper limit or less, a side reaction that causes coloration tends to be suppressed.

After the isocyanurate-forming reaction is ended, unreacted diisocyanates are preferably removed by using a thin film evaporator, or subjecting to extraction. Even in the case where the polyisocyanate compound contains unreacted diisocyanates, the amount of diisocyanates is preferably 3.0% by mass or less, more preferably 1.0% by mass or less, and even more preferably 0.5% by mass or less, relative to the total mass of the polyisocyanate compound. In the case where the amount of remaining unreacted diisocyanates is within the above-mentioned range, the curability tends to be further improved.

The amount of the remaining unreacted diisocyanates can be measured by gas chromatographic analysis.

Examples of the preparation method of the polyisocyanate compound having an allophanate group include a method in which an alcohol is added to diisocyanates and an allophanate-forming reaction catalyst is used.

The alcohol used to form an allophanate group is preferably an alcohol constituted only by carbon, hydrogen and oxygen.

Although the alcohol is not limited to the following alcohols, examples thereof include monoalcohols and dialcohols. One of these alcohols may be used alone, or at least two thereof may be used in combination.

Examples of the monoalcohols include methanol, ethanol, propanol, butanol, pentanol, hexanol, heptanol, octanol, and nonanol.

Examples of the dialcohols include ethylene glycol, 1,3-butanediol, neopentyl glycol, and 2-ethylhexanediol.

Among these, the alcohol is preferably a monoalcohol, and more preferably a monoalcohol having a molecular weight of 200 or less.

The molar ratio of isocyanate groups of the diisocyanates, relative to hydroxyl groups of the alcohol, is preferably 10/1 to 1000/1, and more preferably 100/1 to 1000/1. In the case where the molar ratio is the above-mentioned lower limit or more, the average number of isocyanate groups (the average number of functional groups) can be further ensured. In the case where the molar ratio is the above-mentioned upper limit or less, an effect in which the surface hardness is excellent is exhibited.

Although the allophanate-forming reaction catalyst is not limited to the following compound, examples thereof include alkylcarboxylic acid salts of tin, lead, zinc, bismuth, zirconium, and zirconyl.

Examples of tin alkylcarboxylates (organic tin compounds) include tin 2-ethylhexanoate and dibutyltin dilaurate.

Examples of lead alkylcarboxylates (organic lead compounds) include lead 2-ethylhexanoate.

Examples of zinc alkylcarboxylates (organic zinc compounds) include zinc 2-ethylhexanoate.

Examples of bismuth alkylcarboxylates include bismuth 2-ethylhexanoate.

Examples of zirconium alkylcarboxylates include zirconium 2-ethylhexanoate.

Examples of zirconyl alkylcarboxylates include zirconyl 2-ethylhexanoate.

One of these catalysts may be used alone, or at least two thereof may be used in combination.

The above-mentioned isocyanurate-forming reaction catalyst may also serve as an allophanate-forming reaction catalyst. In the case where the isocyanurate-forming reaction catalyst is used to conduct an allophanate-forming reaction, an isocyanurate-type polyisocyanate is also formed inevitably.

Among them, it is preferable that the above-mentioned isocyanurate-forming reaction catalyst be used as an allophanate-forming reaction catalyst to conduct both an allophanate-forming reaction and an isocyanurate-forming reaction, from the viewpoint of economical production.

The upper limit of the used amount of the above-mentioned allophanate-forming reaction catalyst, relative to the mass of used diisocyanates, is preferably 10000 ppm by mass, more preferably 1000 ppm by mass, and even more preferably 500 ppm by mass. In contrast, although there is no particular limitation on the lower limit of the used amount of the above-mentioned allophanate-forming reaction catalyst, the lower limit may be 10 ppm by mass, for example.

The lower limit of the allophanate-forming reaction temperature is preferably 60°C, more preferably 70°C, even

more preferably 80°C, and particularly preferably 90°C. In contrast, the upper limit of the allophanate-forming reaction temperature is preferably 160°C, more preferably 155°C, even more preferably 150°C, and particularly preferably 145°C.

The allophanate-forming reaction temperature is preferably 60°C to 160°C, more preferably 70°C to 155°C, even more preferably 80°C to 150°C, and particularly preferably 90°C to 145°C.

In the case where the allophanate-forming reaction temperature is the above-mentioned lower limit or more, the reaction rate can be further improved. In the case where the allophanate-forming reaction temperature is the above-mentioned upper limit or less, the change in characteristics such as the coloration of the polyisocyanate tends to be suppressed further effectively.

The lower limit of the allophanate-forming reaction time is preferably 0.2 hours, more preferably 0.4 hours, even more preferably 0.6 hours, particularly preferably 0.8 hours, and most preferably 1 hour. In contrast, the upper limit of the allophanate-forming reaction time is preferably 8 hours, more preferably 6 hours, even more preferably 4 hours, particularly preferably 3 hours, and most preferably 2 hours.

The allophanate-forming reaction time is preferably 0.2 hours to 8 hours, more preferably 0.4 hours to 6 hours, even more preferably 0.6 hours to 4 hours, particularly preferably 0.8 hours to 3 hours, and most preferably 1 hour to 2 hours.

In the case where the allophanate-forming reaction time is the above-mentioned lower limit or more, the viscosity of the polyisocyanate is further decreased. In contrast, in the case where the allophanate-forming reaction time is the above-mentioned upper limit or less, the change in characteristics such as the coloration of the polyisocyanate tends to be suppressed further effectively.

The allophanate-forming reaction is terminated by adding a deactivator against the allophanate-forming reaction catalyst, such as phosphoric acid or methyl para-toluenesulfonate, when the desired yield is obtained.

In the polyisocyanate compound, the molar ratio of allophanate groups to isocyanurate groups (hereinafter, may also be abbreviated as "allophanate group / isocyanurate group") is preferably 0.50 or less, from the viewpoint of improvement in the cross-linkability. The molar ratio of the allophanate group / isocyanurate group may be determined by a $^{13}$C-NMR measurement method.

(Physical properties of polyisocyanate compound)

The number-average molecular weight of the polyisocyanate compound is preferably 450 to 4000, more preferably 500 to 3500, and even more preferably 550 to 3000, from the viewpoint of the solvent-resistance of the resultant coating film.

The number-average molecular weight may be measured using gel permeation chromatography (GPC), for example.

The average number of functional groups in the polyisocyanate compound is preferably 1.8 to 6.2, more preferably 2.0 to 5.6, and even more preferably 2.5 to 4.6, from the viewpoint of the solvent-resistance of the resultant coating film and the retention ratio of isocyanate groups.

The average number of functional groups refers to the number of isocyanate functional groups which are statistically contained in one molecule of the polyisocyanate, and may be calculated by the following equation using the number-average molecular weight (Mn) of the polyisocyanate and the content ratio of the isocyanate groups (NCO%).

$$\text{Average number of functional groups} = \text{Mn} \times \text{NCO\%} / 4200$$

[Hydrophilic compound]

A hydrophilic compound, which is a raw material of a hydrophilic polyisocyanate compound (A), is a compound having a hydrophilic group. It is preferable that each one molecule of the hydrophilic compound have at least one active hydrogen group that can react with an isocyanate group of a polyisocyanate so as to react with one isocyanate group. Specific examples of the active hydrogen group include a hydroxyl group, a mercapto group, a carboxylic acid group, an amino group, and a thiol group.

Although there is no particular limitation on the hydrophilic compound, examples thereof include anionic compounds, cationic compounds, and nonionic compounds. One of these hydrophilic compounds may be used alone, or at least two thereof may be used in combination.

(Anionic compound)

Although there is no particular limitation on the anionic compound, examples thereof include carboxylic acid group-containing compounds, phosphoric acid group-containing compounds, and sulfonic acid group-containing compounds.

Although there is no particular limitation on the carboxylic acid group-containing compounds, examples thereof include carboxylic acids having (a) hydroxyl group(s), such as: monohydroxycarboxylic acids, such as 1-hydroxyacetic acid, 3-hydroxypropanoic acid, 12-hydroxy-9-octadecanoic acid, hydroxypivalic acid, and lactic acid; and polyhydroxy carboxylic acids such as dimethylol acetic acid, 2,2-dimethylol butyric acid, 2,2-dimethylol pentanoic acid, dihydroxy succinic acid, and dimethylol propionic acid. Among these, hydroxypivalic acid or dimethylol propionic acid is preferable.

Although there is no particular limitation on the phosphoric acid group-containing compounds, examples thereof include acidic phosphoric acid esters, acidic phosphorus acid esters, acidic hypophosphorus acid esters, and a particular polyether phosphonate (such as RHODAFAC (trademark), commercially available (Solvay Nicca, Ltd.)). Among these, acidic phosphoric acid esters are preferable.

The content ratio of phosphorus atoms in the polyisocyanate composition, relative to the total mass (100% by mass) of the polyisocyanate composition, is preferably 0.03% by mass or more, more preferably 0.05% by mass or more, and even more preferably 0.1% by mass or more, from the viewpoint of the water-dispersibility. In the case where the content ratio of phosphorus atoms is 0.03% by mass or more, the surface tension tends to decrease, thereby improving the water-dispersibility.

The content ratio of phosphorus atoms in the polyisocyanate composition, relative to the total mass (100% by mass) of the polyisocyanate composition, is preferably 6.0% by mass or less, more preferably 3.0% by mass or less, and even more preferably 1.0% by mass or less, from the viewpoint of physical properties of the resultant coating film. In the case where the content ratio of phosphorus atoms is the above-mentioned upper limit or less, the amount of isocyanate groups to be used in crosslinking tends to increase, thereby improving the physical properties of the resultant coating film.

Although the method for controlling the content ratio of phosphorus atoms to be within the above-mentioned range is not limited to the following method, examples thereof include a method in which the blend ratio of the above-mentioned phosphoric acid group-containing compound and the raw material polyisocyanate compounds is controlled. The content ratio of phosphorus atoms is measured by inductively coupled plasma-atomic emission spectroscopy (ICP-AES).

A sulfonic acid group-containing compound is preferable as the anionic compound. Although there is no particular limitation on the sulfonic acid group-containing compound, examples thereof include hydroxyl group-containing sulfonic acids, and amino group-containing sulfonic acids.

Examples of the hydroxyl group-containing sulfonic acids include 2-hydroxyethanesulfonic acid, 3-hydroxypropanesulfonic acid, 4-hydroxybutanesulfonic acid, 5-hydroxypentanesulfonic acid, 6-hydroxyhexanesulfonic acid, hydroxybenzenesulfonic acid, hydroxy(methyl)benzenesulfonic acid, 4-(2-hydroxyethyl)-1-piperazineethanesulfonic acid, 4-(2-hydroxyethyl)-1-piperazinepropanesulfonic acid, 2-hydroxy-3-morpholinopropanesulfonic acid, and particular polyether sulfonates (such as Tegomer (trademark), commercially available (The Goldschmidt AG, Essen, Germany)).

The hydroxyl group-containing sulfonic acid is preferably a compound of the following general formula (III).

$$HO—R^{31}—SO_3H \qquad (III)$$

In the general formula (III), $R^{31}$ is a C1-10 hydrocarbon group which may have at least one selected from the group consisting of an ether linkage, an ester linkage, a carbonyl group and an imino group. $R^{31}$ may have a ring structure. The ring structure is an aromatic ring, a 5- or 6-membered ring having two nitrogen atoms, or a 5- or 6-membered ring having both a nitrogen atom and an oxygen atom.

Among these, 2-hydroxyethanesulfonic acid, 3-hydroxypropanesulfonic acid, hydroxybenzenesulfonic acid, hydroxy(methyl)benzenesulfonic acid, 2-(cyclohexylamino)-ethanesulfonic acid, or 3-(cyclohexylamino)-propanesulfonic acid is preferable, and 2-hydroxyethanesulfonic acid, or hydroxybenzenesulfonic acid is more preferable.

Examples of the amino group-containing sulfonic acids include 2-aminoethanesulfonic acid, 2-methylaminoethanesulfonic acid, 2-(cyclohexylamino)-ethanesulfonic acid, 3-(cyclohexylamino)-propanesulfonic acid, 4-aminotoluene-2-sulfonic acid, 5-aminotoluene-2-sulfonic acid, 2-aminonaphthalene-4-sulfonic acid, 4-aminobenzenesulfonic acid, and 3-aminobenzenesulfonic acid. Among these, 3-(cyclohexylamino)-propanesulfonic acid is preferable.

An acidic group, such as a carboxylic acid group, a phosphoric acid group, or a sulfonic acid group, of the anionic compound is preferably neutralized with an inorganic base or an organic amine compound. The neutralization of the acidic group makes it possible to obtain a polyisocyanate composition which exhibits an improved water-resistance when made into a coating film.

Examples of the inorganic base include: alkali metals such as lithium, sodium, potassium, rubidium, and cesium; alkaline-earth metals such as magnesium, calcium, strontium, and barium; metals such as manganese, iron, cobalt, nickel, copper, zinc, silver, cadmium, lead, and aluminum; and ammonia.

Examples of the organic amine compound include: linear tertiary amines such as trimethylamine, triethylamine, tripropylamine, tributylamine, trioctylamine, trilaurylamine, tridecylamine, and tristearylamine; branched tertiary amines such as triisopropylamine, triisobutylamine, tri-2-ethylhexylamine, and tri-branched tridecylamine; tertiary amines having mixed hydrocarbon groups such as N,N-dimethylethylamine, N,N-dimethylpropylamine, N,N-dimethylisopropylamine, N,N-dimethylbutylamine, N,N-dimethylisobutylamine, N,N-dimethyloctylamine, N,N-dimethyl-2-ethylhexylamine, N,N-dimethyllaurylamine, N,N-dimethyl (branched) tridecylamine, N,N-dimethylstearylamine, N,N-diethylbutylamine, N,N-diethylhexylamine, N,N-diethyloctylamine, N,N-diethyl-2-ethylhexylamine, N,N-diethyllaurylamine, N,N-diisopropylmethylamine, N,N-diisopropylethylamine, N,N-diisopropylbutylamine, and N,N-diisopropyl-2-ethylhexylamine; alicyclic tertiary amines such as N,N-dimethylcyclohexylamine, N,N-diethylbenzylamine, N,N-diethylcyclohexylamine, N,N-dicyclohexylmethylamine, N,N-dicyclohexylethylamine, and tricyclohexylamine; tertiary amines having an aromatic ring substituent such as N,N-dimethylbenzylamine, N,N-diethylbenzylamine, N,N-dibenzylmethylamine, tribenzylamine, N,N-dimethyl-4-methylbenzylamine, N,N-dimethylphenylamine, N,N-diethylphenylamine, and N,N-diphenylmethylamine; and cyclic amines such as N-methylpyrrolidine, N-ethylpyrrolidine, N-propylpyrrolidine, N-butylpyrrolidine, N-methylpiperidine, N-ethylpiperidine, N-propylpiperidine, N-butylpiperidine, N-methylmorpholine, N-ethylmorpholine, N-propylmorpholine, N-butylmorpholine, N-sec-butylmorpholine, N-tert-butylmorpholine, N-isobutylmorpholine, and quinuclidine. One of these organic amine compounds may be used alone, or at least two thereof may be used in combination.

Among these, C5-30 tertiary amines are preferable, and specific examples thereof include triethylamine, tripropylamine, tributylamine, trioctylamine, trilaurylamine, tridecylamine, triisopropylamine, triisobutylamine, tri-2-ethylhexylamine, tri-branched tridecylamine, N,N-dimethylpropylamine, N,N-dimethylisopropylamine, N,N-dimethylbutylamine, N,N-dimethylisobutylamine, N,N-dimethyloctylamine, N,N-dimethyl-2-ethylhexylamine, N,N-dimethyllaurylamine, N,N-dimethyl (branched) tridecylamine, N,N-dimethylstearylamine, N,N-diethylbutylamine, N,N-diethylhexylamine, N,N-diethyloctylamine, N,N-diethyl-2-ethylhexylamine, N,N-diethyllaurylamine, N,N-diisopropylmethylamine, N,N-diisopropylethylamine, N,N-dimethylcyclohexylamine, N,N-diethylcyclohexylamine, N,N-dicyclohexylmethylamine, N,N-dicyclohexylethylamine, N,N-dimethylbenzylamine, N,N-diethylbenzylamine, N,N-dibenzylmethylamine, tribenzylamine, N,N-dimethylphenylamine, N,N-diethylphenylamine, N,N-diphenylmethylamine, N-methylpiperidine, N-ethylpiperidine, N-methylmorpholine, N-ethylmorpholine, quinuclidine, pyridine, and quinolone, and triethylamine, tripropylamine, tributylamine, trioctylamine, dimethylcyclohexylamine, or diethylcyclohexylamine is preferable. One of these preferable organic amine compounds may be used alone, or at least two thereof may be used in combination.

Although the polyisocyanate compound is modified with the hydrophilic compound (by introducing a hydrophilic group derived from the hydrophilic compound into the polyisocyanate compound) so as to disperse the polyisocyanate compound in water, deterioration in physical properties (such as hardness, water-resistance, or solvent-resistance) of the resultant coating film tends to be prevented by controlling the modification rate not to be excessively high. Since the anionic compound has a high emulsifying capacity, the anionic compound can exhibit a high emulsifying effect even at a small amount, thereby making it easy to disperse the poilyisocyanate compound in water.

The lower limit of the content ratio of sulfur atoms in the polyisocyanate composition, relative to the total mass (100% by mass) of the polyisocyanate composition, is preferably 0.03% by mass, more preferably 0.05% by mass, and even more preferably 0.08% by mass, from the viewpoint of the water-dispersibility. When the content ratio of sulfur atoms is the above-mentioned lower limit or more, the surface tension tends to decrease, thereby further improving water-dispersibility.

The upper limit of the content ratio of sulfur atoms in the polyisocyanate composition, relative to the total mass (100% by mass) of the polyisocyanate composition, is preferably 3.0% by mass, more preferably 2.5% by mass, and even more preferably 2.0% by mass, from the viewpoint of the physical properties of the resultant coating film. When the content ratio of sulfur atoms is the above-mentioned upper limit or less, the amount of isocyanate groups to be used in crosslinking tends to increase, thereby further improving the physical properties of the resultant coating film.

The content ratio of sulfur atoms in the polyisocyanate composition, relative to the total mass (100% by mass) of the polyisocyanate composition, is preferably 0.03% by mass to 3.0% by mass, more preferably 0.05% by mass to 2.5% by mass, and even more preferably 0.08% by mass to 2.0% by mass.

Although the method for controlling the content ratio of sulfur atoms to be within the above-mentioned range is not limited to the following method, examples thereof include a method in which the blend ratio of the sulfonic acid group-containing compound and the raw material polyisocyanate compound is adjusted. The content ratio of sulfur atoms can be measured by ion chromatography (IC).

Although the method for reacting the raw material polyisocyanate compound and the anionic compound is not limited to the following method, examples thereof include a method in which a terminal isocyanate group of polyisocyante of the raw material polyisocyanate compound and an active hydrogen group of the anionic compound are reacted.

In the resultant hydrophilic polyisocyanate compound (A), the molar ratio of isocyanate groups derived from the polyisocyante to hydroxyl groups derived from the anionic compound (isocyanate groups / hydroxyl groups) is preferably 2 to 400, more preferably 5 to 200, even more preferably 10 to 100, and even more preferably 20 to 25, from the viewpoint of the physical properties of the resultant coating film. Alternatively, in the resultant hydrophilic polyisocyanate compound (A), the molar ratio of isocyanate groups derived from the polyisocyante to amino groups derived from the anionic compound (isocyanate groups / amino groups) is preferably 2 to 400, more preferably 5 to 200, even more preferably 10 to 100, and even more preferably 20 to 25, from the viewpoint of the physical properties of the resultant coating film.

(Cationic compound)

Although there is no particular limitation on the cationic compound, examples thereof include hydroxy group-containing amine compounds such as dimethylethanolamine, diethylethanolamine, diethanolamine, methyldiethanolamine, N,N-dimethylaminohexanol, N,N-dimethylaminoethoxyethanol, N,N-dimethylaminoethoxyethoxyethanol, N,N,N'-trimethylaminoethylethanolamine, and N-methyl-N-(dimethylaminopropyl)aminoethanol. Among these, dimethylethanolamine, diethylethanolamine, N,N-dimethylaminohexanol, N,N-dimethylaminoethoxyethanol, or N,N-dimethylaminoethoxyethoxyethanol is preferable. A tertiary amino group (cationic hydrophilic group), which is introduced into the polyisocyanate and derived from a cationic compound, may be quaternized with dimethyl sulfate, diethyl sulfate or the like.

The tertiary amino group of the cationic compound is preferably neutralized with an anionic group-containing compound. Although an anionic group thereof is not particularly limited, examples thereof include a carboxy group, a sulfonic acid group, a phosphoric acid group, a halogen group, and a sulfuric acid group.

Although a carboxyl group-containing compound is not particularly limited, examples thereof include formic acid, acetic acid, propionic acid, butyric acid, and lactic acid.

Although a sulfonic acid group-containing compound is not particularly limited, examples thereof include ethanesulfonic acid.

Although a phosphoric acid group-containing compound is not particularly limited, examples thereof include phosphoric acid and acidic phosphoric acid esters.

Although a halogen group-containing compound is not particularly limited, examples thereof include hydrochloric acid.

Although a sulfuric acid group-containing compound is not particularly limited, examples thereof include sulfuric acid.

Among these, the carboxyl group-containing compounds are preferable, and acetic acid, propionic acid, or butyric acid is more preferable.

(Nonionic compound)

Although the nonionic compound is not particularly limited, examples thereof include polyalkylene glycol alkyl ethers. The number of hydroxyl groups in the polyalkylene glycol alkyl ether is preferably one, from the viewpoint of a decrease in the viscosity of the polyisocyanate composition. The polyalkylene glycol alkyl ether preferably has a structure of the following general formula (IV). The viscosity of the polyisocyanate composition is preferably 100 mPa•s to 10000 mPa•s at 25°C from the viewpoint of readily formulating a coating material.

$$HO-\left(R^{41}O\right)_n-R^{42} \qquad (IV)$$

In the general formula (IV), $R^{41}$ is a C1-4 alkylene group, $R^{42}$ is a C1-4 alkyl group, and n is 4.0 to 20.

The polyalkylene glycol alkyl ether is not composed of a single component, but is composed of plural components having different values of n, which indicates the polymerization degree (hereinafter, may be abbreviated as "polymerization degree n" or "n" simply). Thus, the polymerization degree n is indicated by an average of the values.

There are many cases in which a viscosity increase caused by adding a polyisocyanate to an aqueous main agent becomes a problem. In the case where the viscosity is significantly increased, the polyisocyanate is not able to be dispersed in the main agent uniformly, which may result in deterioration of physical properties of the resultant coating film.

Thus, n is preferably 4.0 to 20, more preferably 4.0 to 16, and even more preferably 4.0 to 12, from the viewpoint of dispersibility in water or a main agent. In the case where n is the above-mentioned lower limit or more, the emulsifying capacity is enhanced, thereby tending to improve the dispersibility. In contrast, in the case where n is the above-mentioned upper limit or less, a viscosiy increase is inhibited, thereby tending to realize ready dispersion.

At least two components having different values of n may be used together as the polyalkylene glycol alkyl ether. The value of n of the polyalkylene glycol alkyl ether may be measured by a proton nuclear magnetic resonance

(NMR) method.

In the general formula (IV), $R^{41}$ is preferably a CI-4 alkylene group from the viewpoint of imparting hydrophilicity, and more preferably a C2 ethylene group from the viewpoint of further imparting hydrophilicity.

In addition, $R^{42}$ is preferably a C1-4 alkyl group from the viewpoint of imparting hydrophilicity, and more preferably a C1 methyl group from the viewpoint of further imparting hydrophilicity.

Although the polyalkylene glycol alkyl ether is not limited to the following examples, examples thereof include polyethylene glycol (mono)methyl ether, poly(ethylene, propylene) glycol (mono)methyl ether, and polyethylene glycol (mono)ethyl ether. Among these, polyethylene glycol (mono)methyl ether is preferable from the viewpoint of imparting hydrophilicity.

The content ratio of moieties derived from the polyalkylene glycol alkyl ether in the polyisocyanate composition, relative to the total mass (100% by mass) of the polyisocyanate composition, is preferably 2.0% by mass to 30% by mass, more preferably 4.0% by mass to 20% by mass, even more preferably 6.0% by mass to 18% by mass, and even more preferably 6.0% by mass to 16% by mass, from the viewpoint of physical properties of the resultant coating film. In the case where the content ratio of moieties derived from the polyalkylene glycol alkyl ether is within the above-mentioned range, the number of isocyanate groups to be used in crosslinking is increased, thereby tending to further improve physical properties (hardness, water resistance and solvent-resistance) of the resultant coating film.

Although the method for controlling the content ratio of moieties derived from the polyalkylene glycol alkyl ether to be within the above-mentioned range is not limited to the following method, examples thereof include a method in which the blend ratio of the polyalkylene glycol alkyl ether and the polyisocyanate compound is adjusted. The content ratio of moieties derived from the polyalkylene glycol alkyl ether may be measured by a liquid chromatography mass spectrometry (LC-MS) method.

The proportion of moieties modified by the polyalkylene glycol alkyl ether in the polyisocyanate composition (modification rate) (hereinafter, may be referred to as "introduction rate of the polyalkylene glycol alkyl ether") refers to the proportion of moieties in which moieties derived from the polyalkylene glycol alkyl ether are introduced, relative to 100 molar equivalents of isocyanate groups of the raw material polyisocyanate compound. The modification rate is preferably 0.5% by mol to 40% by mol, more preferably 1.0% by mol to 30% by mol, and even more preferably 2.0% by mol to 20% by mol, from the viewpoint of controlling the content ratio of moieties derived from the polyalkylene glycol alkyl ether to be within the above-mentioned preferable range.

The above-mentioned content ratio and the modification rate may be determined by the following method, for example.

Specifically, the content ratio and the modification rate may be determined from the peak area ratio of an unintroduced polyisocyanate, a polyisocyanate in which one moiety derived from the polyalkylene glycol alkyl ether is introduced, a polyisocyanate in which two moieties derived from the polyalkylene glycol alkyl ether are introduced, and a polyisocyanate in which at least three moieties derived from the polyalkylene glycol alkyl ether are introduced, by subjecting a sample polyisocyanate composition to liquid chromatography (LC) at 220 nm. The LC measurement conditions are shown below, for example.

(Measurement conditions)

LC apparatus: UPLC (trade name) manufactured by Waters Corporation.

Column: ACQUITY UPLC HSS T3 1.8 μm, C18 inner diameter 2.1 mm × length 50 mm, manufactured by Waters Corporation.

Flow rate: 0.3 mL/min

Mobile phase: A = 10 mM ammonium acetate aqueous solution, B = acetonitrile

Gradient condition: An initial constitution of the mobile phase is A/B=98/2, and the ratio of B is increased linearly after the sample injection, such that the constitution of the mobile phase after ten minutes becomes A/B=0/100.

Detection method: Photodiode array detector is used at a measurement wavelength of 220 nm.

<Phosphite ester compound (B)>

The polyisocyanate composition of the present embodiment contains a phosphite ester compound (B).

The phosphite ester compound (B) is preferably a compound of the following general formula (1).

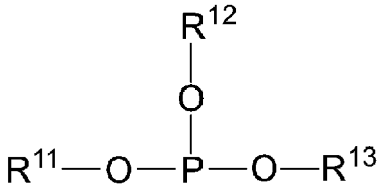

( I )

In the general formula (1), $R^{11}$, $R^{12}$ and $R^{13}$ are each independently a C1-20 alkyl group or a C6-10 aryl group.

The alkyl group as $R^{11}$, $R^{12}$ and $R^{13}$ is preferably a C1-20 linear or branched alkyl group. Examples of such an alkyl group include a methyl group, an ethyl group, a propyl group, an isopropyl group, a butyl group, an isobutyl group, a sec-butyl group, a tert-butyl group, a pentyl group, an isopentyl group, a neopentyl group, a 1-ethylpropyl group, a hexyl group, an isohexyl group, a 1,1-dimethylbutyl group, a 2,2-dimethylbutyl group, a 3,3-dimethylbutyl group, a 2-ethylbutyl group, a hepthyl group, an octyl group, a 2-ethylhexyl group, a nonyl group, a decyl group, an undecyl group, a dodecyl group, a tridecyl group, a pentadecyl group, a hexadecyl group, a heptadecyl group, an octadecyl group, a nonadecyl group, an icosyl group, and an eicosyl group. Among these, C8-18 alkyl groups are preferable from the viewpoint of readily dispersing.

Preferable examples of the aryl group as $R^{11}$, $R^{12}$ and $R^{13}$ include a phenyl group and a phenyl group having at least one C1-20, preferably C1-10 alkyl, substituent.

Specific examples of the phosphite ester compound (B) include triphenyl phosphite, tris(nonylphenyl) phosphite, tricresyl phosphite, triethyl phosphite, tris(2-ethylhexyl) phosphite, tridecyl phosphite, trilauryl phosphite, tris(tridecyl) phosphite, trioleyl phosphite, diphenyl mono(2-ethylhexyl) phosphite, diphenyl monodecyl phosphite, diphenyl mono(tridecyl) phosphite, and tristearyl phosphite. Among these, trilauryl phosphite, tris(tridecyl) phosphite, or diphenyl mono(2-ethylhexyl) phosphite is preferable. One of these phosphite ester compounds (B) may be used alone, or at least two thereof may be used in combination.

[Amount of the phosphite ester compound (B)]

The amount of the phosphite ester compound (B) in the polyisocyanate composition of the present embodiment relative to 100 parts by mass of the polyisocyanate compound is 5.0 parts by mass or less. The amount of the phosphite ester compound (B) relative to 100 parts by mass of the polyisocyanate compound is preferably 3.0 parts by mass or less, more preferably 2.0 parts by mass or less, and most preferably 1.0 parts by mass or less. The amount of the phosphite ester compound (B) is 0.0001 parts by mass or more, and preferably 0.5 parts by mass or more.

In the case where the amount of the phosphite ester compound (B) is within the above-mentioned range, it is possible to obtain a polyisocyanate composition having excellent water-dispersibility and exhibiting excellent hardness, water-resistance and solvent-resistance, when made into a coating film. The polyisocyanate compound used as a reference of the amount of the phosphite ester compound (B) is a raw material polyisocyanate compound used to produce the polyisocyanate composition, or both a hydrophilic polyisocyanate compound (A) and an unintroduced polyisocyanate compound in which no hydrophilic groups are introduced in the polyisocyanate composition.

The amount of the phosphite ester compound (B) may be calculated from the formulation amount thereof in the preparation of the polyisocyanate composition, or may be calculated by liquid chromatography mass spectrometry (LC-MS).

<Acidic phosphoric acid ester compound>

It is preferable that the polyisocyanate composition of the present embodiment further contain an acidic phosphoric acid ester compound.

The acidic phosphoric acid ester compound is preferably a compound of the general formula (II).

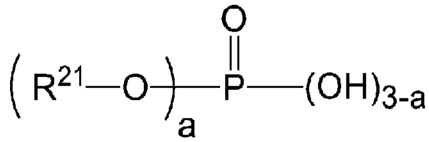

( I I )

In the general formula (II), $R^{21}$ is a C1-20 alkyl group or a C6-10 aryl group, and a is 1 to 2.

The alkyl group as $R^{21}$ is preferably a CI-20 linear or branched alkyl group. Examples of such an alkyl group

include a methyl group, an ethyl group, a propyl group, an isopropyl group, a butyl group, an isobutyl group, a sec-butyl group, a tert-butyl group, a pentyl group, an isopentyl group, a neopentyl group, a 1-ethylpropyl group, a hexyl group, an isohexyl group, a 1,1-dimethylbutyl group, a 2,2-dimethylbutyl group, a 3,3-dimethylbutyl group, a 2-ethylbutyl group, a hepthyl group, an octyl group, a 2-ethylhexyl group, a nonyl group, a decyl group, an undecyl group, a dodecyl group, a tridecyl group, a pentadecyl group, a hexadecyl group, a heptadecyl group, an octadecyl group, a nonadecyl group, an icosyl group, and an eicosyl group. Among these, C8-18 alkyl groups are preferable from the viewpoint of readily dispersing.

Preferable examples of the aryl group as $R^{21}$ include a phenyl group and a phenyl group having at least one C1-20, preferably C1-10, alkyl substituent.

Specific examples of the acidic phosphoric acid ester compound include ethyl acid phosphate, butyl acid phosphate, butoxyethyl acid phosphate, 2-ethylhexyl acid phosphate, alkyl (C12, C14, C16, C18) acid phosphate, isotridecyl acid phosphate, oleyl acid phosphate, tetracosyl acid phosphate, ethylene glycol acid phosphate, 2-hydroxyethylmethacrylate acid phosphate, dibutyl phosphate, and bis(2-ethylhexyl) phosphate, and 2-ethylhexyl acid phosphate or isotridecyl acid phosphate is preferable. One of these acidic phosphoric acid ester compounds may be used alone, or at least two thereof may be used in combination.

[Amount of the acidic phosphoric acid ester compound]

In the polyisocyanate composition of the present embodiment, the amount of the acidic phosphoric acid ester compound is preferably 20.0 parts by mass or less, more preferably 15.0 parts by mass or less, even more preferably 10.0 parts by mass or less, even more preferably 8.0 parts by mass or less, even more preferably 5.0 parts by mass or less, and even more preferably 2.0 parts by mass or less, relative to 100 parts by mass of the polyisocyanate compound. The amount of the acidic phosphoric acid ester compound is preferably 0.0001 parts by mass or more, and more preferably 0.01 parts by mass or more.

In the case where the amount of the acidic phosphoric acid ester compound is within the above-mentioned range, it is possible to obtain a polyisocyanate composition having excellent water-dispersibility and exhibiting excellent hardness, water-resistance and solvent-resistance, when made into a coating film. The polyisocyanate compound used as a reference of the amount of the acidic phosphoric acid ester compound is a raw material polyisocyanate compound used to produce the polyisocyanate composition, or both a hydrophilic polyisocyanate compound (A) and an unintroduced polyisocyanate compound in which no hydrophilic groups are introduced in the polyisocyanate composition.

The amount of the acidic phosphoric acid ester compound may be calculated from the formulation amount thereof in the preparation of the polyisocyanate composition, or may be calculated by liquid chromatography mass spectrometry (LC-MS).

<Other components>

The polyisocyanate composition of the present embodiment may further contain other components in addition to the hydrophilic polyisocyanate compound (A) and the phosphite ester compound (B). Although there is no particular limitation on the other components, examples thereof include solvents, antioxidants, light stabilizers, polymerization inhibitors, surfactants, and antiperoxidants.

The solvents may be hydrophilic solvents or hydrophobic solvents. These solvents may be used alone or in combination.

Although there is no particular limitation on the hydrophobic solvents, examples thereof include mineral spirits, solvent naphtha, LAWS (Low Aromatic White Spirit), HAWS (High Aromatic White Spirit), toluene, xylene, cyclohexane, esters, ketones, and amides.

Examples of the esters include ethyl acetate, and butyl acetate.

Examples of the ketones include acetone, methylethylketone, methylisobutylketone, and cyclohexanone.

Examples of the amides include N,N-dimethylformamide, and N,N-dimethylacetamide.

Although there is no particular limitation on the hydrophilic solvent, examples thereof include alcohols, ethers, and esters such as etheralcohols.

Examples of the alcohols include methanol, ethanol, propanol, isopropanol, and 2-ethylhexanol.

Examples of the ethers include diethylene glycol dimethyl ether, diethylene glycol diethyl ether, diethylene glycol dibutyl ether, and dipropylene glycol dimethyl ether.

Examples of the esters of etheralcohols include ethylene glycol monomethyl ether acetate, ethylene glycol monoethyl ether acetate, ethylene glycol monobutyl ether acetate, diethylene glycol monoethyl ether acetate, diethylene glycol monobutyl ether acetate, propylene glycol monoethyl ether acetate, propylene glycol monomethyl ether acetate, and dipropylene glycol monomethyl ether acetate.

The amount of the solvent in the polyisocyanate composition of the present embodiment relative to the total

mass of the polyisocyanate composition of the present embodiment is preferably 0% by mass to 90% by mass, more preferably 0% by mass to 50% by mass, and even more preferably 0% by mass to 30% by mass, from the viewpoint of readily dispersing.

Examples of the antioxidants and the light stabilizers include the following compounds (a) to (e). One of these compounds may be contained alone, or at least two thereof may be contained.

(a) Aliphatic, aromatic or alkyl-substituted aromatic esters of phosphoric acid or phosphorus acid, and hypophosphorous acid derivatives.
(b) Phosphorous compounds, such as phenylphosphonic acid, phenylphosphinic acid, diphenylphosphonic acid, polyphosphonate, dialkylpentaerythritol diphosphite, and dialkylbisphenol A diphosphite.
(c) Phenol-based derivatives (particularly, hindered phenol compounds).
(d) Sulfur-containing compounds such as thioether-based compounds, dithionate-based compounds, mercaptobenzimidazole-based compounds, thiocarbanilide-based compounds, and thiodipropionate esters.
(e) Tin-based compounds such as tin malate and dibutyltin monoxide.

Examples of the polymerization inhibitors include hydroquinones, phenols, cresols, catechols, and benzoquinones. Specific examples of the polymerization inhibitors include benzoquinone, p-benzoquinone, p-toluquinone, p-xyloquinone, naphthoquinone, 2,6-dichloroquinone, hydroquinone, trimethylhydroquinone, catechol, p-t-butylcatechol, 2,5-di-t-butylhydroquinone, monomethylhydroquinone, p-methoxyphenol, 2,6-di-t-butyl-p-cresol, and hydroquinone monomethyl ether. One of these compounds may be contained alone, or at least two thereof may be contained.

Examples of the surfactants include conventionally-known anionic surfactants, cationic surfactants, and amphoteric surfactants.

The total amount of the antioxidants, the light stabilizers, the polymerization inhibitors and the surfactants in the polyisocyanate composition of the present embodiment relative to the total mass of the polyisocyanate composition of the present embodiment is preferably 0% by mass to 10% by mass, more preferably 0% by mass to 5% by mass, and even more preferably 0% by mass to 2% by mass.

<Preparation method of polyisocyanate composition>

The preparation methods of the polyisocyanate composition of the present embodiment include: either a step (1) in which a polyisocyanate compound and a hydrophilic compound are reacted in the presence of a phosphite ester compound (B) to obtain a hydrophilic polyisocyanate compound (A); or a step (2) in which a polyisocyanate compound and a hydrophilic compound are reacted to obtain a hydrophilic polyisocyanate compound (A), followed by mixing the resultant hydrophilic polyisocyanate compound (A) with a phosphite ester compound (B), wherein no step in which an acidic group derived from the hydrophilic compound is neutralized is conducted after the polyisocyanate compound and the hydrophilic compound are reacted in the step (1) or (2). The step (1) is preferably conducted from the viewpoint of a decreased turbidity after a dilution with a solvent.

In the reaction of the polyisocyanate compound and the hydrophilic compound, an organic metal salt, a tertiary amine-based compound, or an alkali metal alkolate may be used as a catalyst. Examples of metal constituting the organic metal salt include tin, zinc, and lead. Examples of alkali metal include sodium.

The reaction temperature of the polyisocyanate compound and the hydrophilic compound is preferably -20°C to 150°C, and more preferably 30°C to 130°C. In the case where the reaction temperature is the above-mentioned lower limit or more, the reactivity tends to be enhanced. In the case where the reaction temperature is the above-mentioned upper limit or less, the side reaction tends to be suppressed further effectively.

It is preferable that the hydrophilic compound be reacted with the polyisocyanate completely such that no unreacted hydrophilic compounds remain. In the case where the unreacted hydrophilic compound is absent, the water-dispersibility of the polyisocyanate composition and the pot life of the resultant coating composition tend to become further favorable.

In the case where the hydrophilic compound is a hydroxyl group-containing sulfonic acid, the preparation method of the polyisocyanate composition of the present embodiment preferably includes a step (A) in which an amine salt of a hydroxyl group-containing sulfonic acid and a polyisocyanate are mixed and reacted. Alternatively, the preparation method of the polyisocyanate composition of the present embodiment preferably includes a step (B) in which a hydroxyl group-containing sulfonic acid, a polyisocyanate, and an amine compound are mixed and reacted.

In the step (A), it is preferable that the amine salt of sulfonic acid be prepared in advance, followed by adding the amine salt to the polyisocyanate. In the step (B), the hydroxyl group-containing sulfonic acid and the amine compound may be added to the polyisocyanate simultaneously or sequentially.

Particularly, the step (A) is preferably conducted, and it is more preferable that the amine salt of sulfonic acid be prepared in advance, followed by adding the amine salt to the polyisocyanate.

In the reaction step, the blend ratio of the polyisocyanate to either the hydroxyl group-containing sulfonic acid or the amine salt thereof preferably satisfies the molar ratio, isocyanate group / hydroxyl group, of 2 to 400, more preferably 5 to 200, and even more preferably 10 to 100, from the viewpoint of emulsifiability and physical properties of the resultant coating film.
Although the reaction temperature or the reaction time may be appropriately determined depending on the reaction progress in the reaction step, the reaction temperature is preferably 0°C to 150°C, and the reaction time is preferably 30 minutes to 48 hours.
A conventionally-known catalyst may be used in the reaction in accordance with circumstances. Although there is no particular limitation on the catalyst, examples thereof include the following compounds (a) to (f). These compounds may be used alone or mixed to be used together.

(a) Organic tin compounds such as tin octanoate, tin 2-ethyl-1-hexanoate, tin ethylcaproate, tin laurate, tin palmitate, dibutyltin oxide, dibutyltin dichloride, dibutyltin diacetate, dibutyltin dimalate, dibutyltin dilaurate, dioctyltin diacetate, and dioctyltin dilaurate.
(b) Zinc chloride, and organic zinc compounds such as zinc octanoate, zinc 2-ethyl-1-hexanoate, zinc 2-ethylcaproate, zinc stearate, zinc naphthenate, and zinc acetylacetonate.
(c) Organic titanium compounds.
(d) Organic zirconium compounds.
(e) Tertiary amines such as triethylamine, tributylamine, N,N-diisopropylethylamine, and N,N-dimethylethanolamine.
(f) Diamines such as triethylenediamine, tetramethylethylenediamine, and 1,4-diazabicyclo[2.2.2]octane.

The formulation amount of the phosphite ester compound (B) in the step (1) or the step (2) may be appropriately controlled such that the amount of the above-mentioned phosphite ester compound (B) falls within the above-mentioned range.
In the preparation method of the polyisocyanate composition of the present embodiment, a solvent may be used or may not be used. The solvent to be used in the preparation method of the polyisocyanate composition of the present embodiment may be a hydrophilic solvent or a hydrophobic solvent. Examples of the hydrophilic solvent and the hydrophobic solvent include the same solvents as those exemplified as other components.
In the preparation method of the polyisocyanate composition of the present embodiment, at least one selected from the group consisting of antioxidants, light stabilizers, polymerization inhibitors and surfactants may be further added in addition to the hydrophilic polyisocyanate compound (A) and the phosphite ester compound (B). Examples of the antioxidants, the light stabilizers, the polymerization inhibitors and the surfactants include the same compounds as those exemplified as other components.

<Characteristics of polyisocyanate composition>

In the case where the hydrophilic compound in the polyisocyanate composition of the present embodiment is a hydroxyl group-containing sulfonic acid, the modification rate by the hydroxyl group-containing sulfonic acid relative to 100 mol of isocyanate groups in a raw material polyisocyanate compound is preferably 0.25 mol to 50 mol, more preferably 0.5 mol to 20 mol, and even more preferably 1 mol to 10 mol, from the viewpoint of emulsifiability and physical properties of the resultant coating film.
The modification rate by the hydroxyl group-containing sulfonic acid may be measured by liquid chromatography (LC).
The content ratio of isocyanate groups in the polyisocyanate composition of the present embodiment relative to 100% by mass of non-volatile components is preferably 10% by mass to 25% by mass, and more preferably 15% by mass to 24% by mass, from the viewpoint of solvent-resistance of the resultant coating film. Although there is no particular limitation on the method for controlling the content ratio of isocyanate groups to be within the above-mentioned range, examples thereof include a method in which the blend ratio of a hydrophilic compound and a polyisocyanate compound is adjusted. The content ratio of isocyanate groups may be measured by the method described in examples below, for example.

«Coating composition»

A coating composition of the present embodiment contains the above-mentioned polyisocyanate composition.
Although the coating composition of the present embodiment may be used as an organic solvent-based coating composition, the coating composition is preferably used as an aqueous coating composition in which the above-mentioned polyisocyanate composition and a resin that contributes to formation of a coating film are dissolved or dispersed in a medium containing water as the main component thereof. Particularly, the coating composition may also be used as an

architectural coating material, automotive coating material, automotive refinishing coating material, coating material to be applied on plastics, tackifier, adhesive, building material, household aqueous coating material, other coating agent, sealing agent, ink, casting material, elastomer, foam, plastic raw material, or fiber treatment agent.

<Resin>

Although there is no particular limitation on the resin as the main agent in the coating composition of the present embodiment, examples thereof include acrylic resins, polyester resins, polyether resins, epoxy resins, fluorine resins, polyurethane resins, polyvinylidene chloride copolymers, polyvinyl chloride copolymers, vinyl acetate copolymers, acrylonitrile-butadiene copolymers, polybutadiene copolymers, and styrene-butadiene copolymers.
Among these, the resin is preferably an acrylic resin, a polyester resin or a polyether resin.

(Acrylic resin)

Although there is no particular limitation on the acrylic resin, examples thereof include acrylic resins formed by polymerizing one or a mixture of the following polymerizable monomers (a) to (e). One of these acrylic resins may be used alone or a mixture thereof may be used.

(a) (Meth)acrylic esters, such as methyl (meth)acrylate, ethyl (meth)acrylate, isopropyl (meth)acrylate, n-butyl (meth)acrylate, 2-ethylhexyl (meth)acrylate, and lauryl (meth)acrylate.
(b) (Meth)acrylic esters having an active hydrogen, such as 2-hydroxyethyl (meth)acrylate, 2-hydroxypropy (meth)acrylate, 2-hydroxybutyl (meth)acrylate, 3-hydroxypropyl (meth)acrylate, and 4-hydroxybutyl (meth)acrylate.
(c) Unsaturated carboxylic acids, such as acrylic acid, methacrylic acid, maleic acid, and itaconic acid.
(d) Unsaturated amides such as acrylamide, N-methylol acrylamide, and diacetone acrylamide.
(e) Polymerizable monomers, such as glycidyl methacrylate, styrene, vinyl toluene, vinyl acetate, acrylonitrile, dibutyl fumarate, p-styrenesulfonic acid, or allyl sulfosuccinic acid.

Although an emulsion polymerization method is generally adopted as a polymerization method of these monomers, a suspension polymerization method, a dispersion polymerization method, or a solution polymerization method may also be adopted. In the emulsion polymerization method, polymerization may be conducted in a stepwise manner.

(Polyester resin)

Although there is no particular limitation on the polyester resin, examples thereof include polyester resins obtained by condensation reaction of one or a mixture of carboxylic acids with one or a mixture of polyhydric alcohols.
Examples of the carboxylic acids include succinic acid, adipic acid, sebacic acid, dimer acid, maleic anhydride, phthalic anhydride, isophthalic acid, terephthalic acid, trimellitic acid, and pyromellitic acid.
Examples of the polyhydric alcohol include diols, triols, and tetraols.
Examples of the diols include ethylene glycol, diethylene glycol, triethylene glycol, propylene glycol, dipropylene glycol, tripropylene glycol, 1,2-propanediol, 1,3-propane diol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethyl-hexanediol, 1,2-octanediol, 1,2-decanediol, 2,2,4-trimethylpentanediol, 2-butyl-2-ethyl-1,3-propanediol, and 2,2-diethyl-1,3-propanediol.
Examples of the triols include glycerin, and trimethylolpropane.
Examples of the tetraols include diglycerin, dimethylolpropane, and pentaerythritol.
Alternatively, polycaprolactones obtained by ring-opening polymerization of ε-caprdactone with a hydroxyl group of a polyol having a low molecular weight may also be used as polyester resins.

(Polyether resins)

Examples of the polyether resins include the following resins (a) to (d).

(a) Polyether polyols obtained by adding one or a mixture of alkylene oxides to one or a mixture of polyvalent hydroxy compounds using a strong basic catalyst.
(b) Polyether polyols obtained by reacting an alkylene oxide with a polyamine compound.
(c) Polyether polyols obtained by ring-opening polymerization of cyclic ethers.
(d) Polymer polyols obtained by polymerization of acrylamides using the polyether polyols (a) to (c) as mediums.

Examples of the polyvalent hydroxyl compounds used in (a) include the following compounds (i) to (vi).

(i) Diglycerin, ditrimethylol propane, pentaerythritol, and dipentaerythritol.
(ii) Sugar alcohol-based compounds such as erythritol, D-threitol, L-arabinitol, ribitol, xylitol, sorbitol, mannitol, galactitol, and rhamnitol.
(iii) Monosaccharides such as arabinose, ribose, xylose, glucose, mannose, galactose, fructose, sorbose, rhamnose, fucose, and ribodesose.
(iv) Disaccharides such as trehalose, sucrose, maltose, cellobiose, gentiobiose, lactose, and melibiose.
(v) Trisaccharides such as raffinose, gentianose, and melicitose.
(vi) Tetrasaccharides such as stachyose.

Examples of the strong basic catalyst used in (a) include hydroxides of alkali metals, alkolates, and alkylamines. Examples of the alkali metals include lithium, sodium, and potassium.
Examples of the alkylene oxide used in (a) include ethylene oxide, propylene oxide, butylene oxide, cyclohexene oxide, and styrene oxide.
Examples of the polyamine compounds used in (b) include ethylene diamines.
Examples of the cyclic ethers used in (c) include tetrahydrofuran.
In the coating composition of the present embodiment, these resins may be contained together with a resin such as a melamine-based curing agent, a urethane dispersion, or a urethane acrylic emulsion, as needed.
It is preferable that these resins be emulsified, dispersed or dissolved in water, and therefore carboxyl groups, sulfone groups, or the like contained in the resins may be neutralized.
Although there is no particular limitation on a neutralizing agent available to neutralize the carboxyl groups, the sulfone groups, or the like, examples thereof include ammonia and water-soluble amino compounds.
Examples of the water-soluble amino compounds include monoethanolamine, ethylamine, dimethylamine, diethylamine, triethylamine, propylamine, dipropylamine, isopropylamine, diisopropylamine, triethanolamine, butylamine, dibutylamine, 2-ethylhexylamine, ethylenediamine, propylenediamine, methylethanolamine, dimethylethanolamine, diethylethanolamine, and morpholine. One of these may be used alone or at least two thereof may be used in combination.
Among these, the neutralizing agent is preferably a tertiary amine, and more preferably triethylamine or dimethylethanolamine.

<Other components>

The coating composition of the present embodiment may further contain an additive which is commonly added to a coating material, in addition to the above-mentioned polyisocyanate composition and the resin. Examples of the additive include inorganic pigments, organic pigments, extender pigments, silane coupling agents, titanium coupling agents, organic phosphoric acid salts, organic phosphorous acid salts, thickeners, leveling agents, thixotropy imparting agents, anti-foaming agents, anti-freezing agents, delusterants, crosslinking catalysts (hardening acceleration catalysts), anti-sticking agents, dispersants, wetting agents, fillers, plasticizers, lubricants, reductants, preservatives, anti-fungal agents, deodorants, anti-yellowing agents, ultraviolet absorbers, anti-static agents, electrostatic modifiers, or anti-setting agents. One of these additives may be contained alone, or at least two thereof may be contained together.
Although the crosslinking catalysts (hardening acceleration catalysts) are not limited to the following examples, examples thereof include the following compounds (a) and (b).

(a) Metal salts such as dibutyltin dilaurate, tin 2-ethylhexanoate, zinc 2-ethylhexanoate, and cobalt salts.
(b) Tertiary amines such as triethylamine, pyridine, methylpyridine, benzyldimethylamine, N,N-dimethylcyclohexylamine, N-methylpiperidine, pentamethyl diethylene triamine, and N,N'-end ethylene piperazine, and N,N'-dimethyl piperazine.

The coating composition of the present embodiment may further contain a surfactant in addition to the above-mentioned polyisocyanate composition and the resin so as to improve the dispersibility in a coating material.
The coating composition of the present embodiment may further contain an antioxidant, a light stabilizer, or a polymerization inhibitor in addition to the above-mentioned polyisocyanate composition and the resin, so as to improve the storage stability of a coating material.

«Coated substrate»

A coated substrate of the present embodiment is a coated substrate formed by applying the above-mentioned coating composition on a desired substrate. The coated substrate of the present embodiment preferably has a coating

layer composed of a coating film formed by curing the above-mentioned coating composition.

The coated substrate of the present embodiment may contain a usual primer layer between a desired substrate and the coating layer.

Examples of the substrate include metals, wood, glass, stones, ceramic materials, cement, hard and flexible plastics, textiles, leather products, and papers.

Examples

Although the present invention will be explained below by showing examples and comparative examples further specifically, it is to be understood that the present invention is not limited to the following examples unless the gist thereof is exceeded.

The measurement and evaluation of physical properties of polyisocyanate compositions in examples and comparative examples were conducted as described below. The terms "parts" and "%" mean "parts by mass" and "% by mass", respectively, unless otherwise specified.

<Measurement method of physical properties>

[Physical property 1]

(Viscosity)

The viscosity was measured using an E-type viscometer (manufactured by Tokimec, Inc.) at 25°C. A standard rotor (1° 34' × R24) was used. The rotation speed is described below.

(Rotation speed)

100 rpm (at less than 128 mPa•s)
50 rpm (at 128 mPa•s or more but less than 256 mPa•s)
20 rpm (at 256 mPa•s or more but less than 640 mPa•s)
10 rpm (at 640 mPa•s or more but less than 1280 mPa•s)
5 rpm (at 1280 mPa•s or more but less than 2560 mPa•s)
2.5 rpm (at 2560 mPa•s or more but less than 5120 mPa•s)

[Physical property 2]

(Content ratio of isocyanate groups)

The content ratio of isocyanate groups (content ratio of NCO groups) in each polyisocyanate composition obtained in each example or comparative example as each sample was determined by the method described in JIS K 7301-1995 (tolylene diisocyanate-type prepolymer test method for thermosetting urethane elastomer). A further specific measurement method of the content ratio of isocyanate groups is described below.

(1) 1 g of a sample (W g) was put in a 200 mL conical flask, followed by adding 20 ml of toluene thereto to dissolve the sample.
(2) Then, 20 mL of a 2.0 N di-n-butylamine•toluene solution was added to the flask, and then left still for 15 minutes.
(3) 70 mL of 2-propanol was added to the flask, and then dissolved therein to obtain a solution.
(4) The solution obtained in the step (3) mentioned above was titrated with a 1 mol/L hydrochloric acid to determine the sample titer (VI mL).
(5) A blank titer (V0 mL) was determined by conducting the above-mentioned steps (1) to (3) except that no sample was used.

The content ratio of isocyanate groups (NCO%) was determined from the sample titer and the blank titer using the following equation.

$$[\text{Content ratio of isocyanate groups}]\ (\%\ \text{by mass}) = (V0 - V1) \times 42 / [W\ (1g) \times 1000] \times 100$$

[Physical property 3]

(Non-volatile content)

In the case where each polyisocyanate composition obtained in each example or comparative example, used as a sample, was diluted with a solvent, the non-volatile content was calculated by the following method. First, the mass (W0 g) of an aluminum cup was measured accurately, followed by putting approximately 1 g of a sample in the cup and then the mass of the resultant cup (W1 g) before conducting heating to dry was measured accurately. Then, the resultant cup in which the sample was placed was heated in a drier at 105°C for 3 hours. Then, the heated cup was cooled to room temperature, followed by measuring accurately the mass of the resultant cup (W2 g). Then, the mass ratio (% by mass) of the dried residue in the sample was calculated by the following equation as the non-volatile content. In the case where the dilution with a solvent was not conducted, the non-volatile content was considered to be substantially 100%.

$$[\text{Non-volatile content}]\ (\%\ \text{by mass}) = (W2-W0) / (W1-W0) \times 100$$

[Physical property 4]

(Number-average molecular weight (Mn))

The number-average molecular weight of the polyisocyanate composition was obtained by measuring the number-average molecular weight with reference to polystyrene standards by GPC measurement under the following measurement conditions.

(Measurement conditions)

Device: HLC-8120GPC (trade name) (manufactured by Tosoh Corporation).
Column: TSKgel SuperH1000 (trade name) × 1 column, TSKgel SuperH2000 (trade name) × 1 column, TSKgel SuperH3000 (trade name) × 1 column (all of these were manufactured by Tosoh Corporation.)

Carrier: Tetrahydrofuran
Detection method: Differential refractometer

[Physical property 5]

(Average number of functional groups)

The average number of functional groups refers to the number of isocyanate functional groups which are statistically contained in one molecule of the polyisocyanate, and may be calculated by the following equation using the number-average molecular weight (Mn) of the polyisocyanate obtained in the "physical property 4" and the content ratio of isocyanate groups (NCO%) obtained in the "physical property 2".

$$[\text{Average number of functional groups}] = Mn \times NCO\% / 4200$$

[Molar equivalent ratio]

A specific calculation method of the molar equivalent ratio of isocyanate groups / hydroxyl groups is described below.

(1) The mass of a polyisocyanate used in each Example or Comparative Example is indicated as W3, and the content ratio of isocyanate groups is indicated as NCO%.

(2) The mass of a neutralized salt or a sulfonic acid used in each Example or Comparative Example is indicated as W4, and the molecular weight is indicated as M. The molar equivalent ratio is obtained by the following equation.

$$[\text{Molar equivalent ratio}] = (W3 \times NCO\% / 42) / (W4 / M)$$

<Evaluation method>

[Evaluation 1]

(APHA)

The Hazen color number (APHA) of each polyisocyanate composition was measured using a Lovibond automatic chromatometer PFXi-195.

[Evaluation2]

(Turbidity (transmittance))

The turbidity of a mixture solution composed of a polyisocyanate composition and toluene was measured as the transmittance (%) at 550 nm by UV measurement using the following device.
Device: JASCO V-650

[Preparation of coating composition]

40 g of an acrylic polyol aqueous dispersion (trade name: Setaqua 6510, hydroxyl value per resin: 138 mgKOH/g, manufactured by Allnex Ltd.) was put in a container. Then, each polyisocyanate composition obtained in each example or comparative example was added thereto such that the molar ratio (NCO/OH) of isocyanate groups in the polyisocyanate composition to hydroxyl groups in the acrylic polyol aqueous dispersion became 1.25. Then, deionized water was added to the resultant such that the solid amount in the resultant coating composition became 42% by mass, followed by stirring the resultant with a propeller blade at 600 rpm for 10 minutes to obtain each coating composition. The resultant coating composition was evaluated as mentioned below.

[Evaluation3]

(Pot life)

Each coating composition obtained by the above-mentioned method was coated on a glass plate such that a coating film was formed until gelation to gain a film thickness of 40 μm per hour, followed by drying the resultant under an atmosphere at 23°C and 50% humidity, and then, the next day, the luster of the resultant coating film was measured. The time immediately after completion of preparation of the coating composition was defined as 0 hours, the degree of luster (20°) at the time of 0 hours was indicated as G0, the degree of luster after n hours was indicated as Gn, and the retention ratio of isocyanate groups, Gn / G0, was calculated to determine the time in which at least 80% of isocyanate groups was maintained as the time of pot life. The pot life was evaluated in accordance with the following evaluation criteria.

(Evaluation criteria)

◦: 4 hours or more
△: 2 hours or more but less than 4 hours
×: less than 2 hours

[Evaluation 4]

(Water resistance of coating film)

Each coating composition obtained by the above-mentioned method was coated on a glass plate using an

applicator such that the thickness thereof became 40 μm. Then, the resultant was dried under an atmosphere at 23°C and 50% RH for 7 days to obtain a coating film. Then, a silicon O-ring having a diameter of 20 mm was placed on the resultant coating film, and 0.5 g of water was poured therein. Then, the resultant was placed at 23°C for 24 hours, followed by removing water remaining on the surface thereof to observe the coating film. The water resistance of the coating film was evaluated in accordance with the following evaluation criteria. The term "blister" in the following evaluation criteria refers to the bleb or the swollenness generated on the surface of the coating film.

(Evaluation criteria)

◦: There was no change.
△: White turbidity or blister was not generated.
×: Blister or white turbidity was generated, or the coating film was dissolved.

[Evaluation 5]

(Koenig hardness of coating film)

Each coating composition obtained by the above-mentioned method was coated on a glass plate using an applicator such that the thickness thereof became 40 μm. Then, the resultant was dried under an atmosphere at 23°C and 50% humidity for 7 days to obtain a coating film. The surface hardness (Koenig hardness) of the resultant coating film was measured using a pendulum hardness meter manufactured by BYK Chemie at 23°C and evaluated in accordance with the following evaluation criteria.

◦: The Koenig hardness was 80 or more.
△: The Koenig hardness was 40 or more but less than 80.
×: The Koenig hardness was less than 40.

<Synthesis of amine sulfonate>

Synthesis Example 1

(Synthesis of HES/TBA)

10 parts by mass of 1-propanol was added to 20 parts by mass of an aqueous solution of 70% by mass 2-hydroxyethanesulfonic acid (hereinafter, may be abbreviated as "HES"), followed by stirring the mixture to obtain a solution. A tributylamine (hereinafter, may be abbreviated as "TBA") was weighed such that the molar equivalent ratio thereof to HES became 1, and diluted with the same parts by mass of 1-propanol, followed by adding dropwise the resultant dilution to the solution while conducting stirring. 1 hour after the start of the dropwise addition, the stirring was stopped, followed by removing water and the solvent using an evaporator, to obtain a 2-hydroxyethanesulfonic acid tributylamine salt (hereinafter, may be abbreviated as "HES / TBA") in which the solid content was 99.8% by mass.

Synthesis Example 2

(Synthesis of HBS / DMCHA)

10 parts by mass of 1-propanol was added to 20 parts by mass of an aqueous solution of 85% by mass 4-hydroxybenzenesulfonic acid (hereinafter, may be abbreviated as "HBS"), followed by stirring the mixture to obtain a solution. A dimethylcyclohexylamine (hereinafter, may be abbreviated as "DMCHA") was weighed such that the molar equivalent ratio thereof to HBS became 1, and diluted with the same parts by mass of 1-propanol, followed by adding dropwise the resultant dilution to the solution while conducting stirring. 1 hour after the start of the dropwise addition, the stirring was stopped, followed by removing water and the solvent using an evaporator, to obtain a 4-hydroxybenzenesulfonic acid dimethylcyclohexylamine (hereinafter, may be abbreviated as "HBS / DMCHA") in which the solid content was 99.8% by mass.

<Synthesis of polyisocyanate compound>

Synthesis Example 3

(Synthesis of polyisocyanate P-1)

1000 g of HDI and 4.0 g of isobutanol were charged into a four-necked flask equipped with a stirrer, a thermometer, a reflux cooling tube, a nitrogen inlet tube and a dropping funnel in a nitrogen atmosphere, and then the mixture was stirred while maintaining the temperature in the reactor at 70°C. Tetramethylammonium caprylate was added to the resultant, followed by adding phosphoric acid thereto to terminate the reaction when the yield became 25% by mass. Then, the reaction liquid was subjected to filtration, followed by removing unreacted HDI using a thin film evaporator to obtain a polyisocyanate P-1. The viscosity of the resultant polyisocyanate P-1 at 25°C was 1500 mPa•s, and the content ratio of isocyanate groups was 23.1% by mass.

Synthesis Example 4

(Synthesis of polyisocyanate P-2)

A polyisocyanate P-2 was obtained in the same manner as that in Synthesis example 3, except that phosphoric acid was added to terminate the reaction when the yield became 50% by mass. The viscosity of the resultant polyisocyanate P-2 at 25°C was 2700 mPa•s, and the content ratio of isocyanate groups was 21.7% by mass.

Synthesis Example 5

(Synthesis of polyisocyanate P-3)

1000 g of IPDI was charged into a four-necked flask equipped with a stirrer, a thermometer, a reflux cooling tube, a nitrogen inlet tube and a dropping funnel in a nitrogen atmosphere, and then stirred while maintaining the temperature in the reactor at 70°C. Tetramethylammonium caprylate was added to the reactor, followed by adding phosphoric acid thereto to terminate the reaction when the yield became 25% by mass. Then, the reaction liquid was subjected to filtration, followed by removing unreacted IPDI using a thin film evaporator, and then adding 25% by mass of propylene glycol monomethyl ether acetate (PMA) to obtain a polyisocyanate P-3. The viscosity of the resultant polyisocyanate P-3 at 25°C was 1800 mPa•s, and the content ratio of isocyanate groups was 12.1 % by mass.

Synthesis Example 6

(Synthesis of polyisocyanate P-4)

1000 g of HDI and 4.0 g of isobutanol were charged into a four-necked flask equipped with a stirrer, a thermometer, a reflux cooling tube, a nitrogen inlet tube and a dropping funnel in a nitrogen atmosphere, and then the mixture was stirred while maintaining the temperature in the reactor at 70°C. Tetramethylammonium caprylate was added to the resultant, followed by adding phosphoric acid thereto to terminate the reaction when the yield became 25% by mass. Then, the reaction liquid was subjected to filtration, followed by removing unreacted HDI using a thin film evaporator, and then mixing, in equal mass, the resultant polyisocyanate and a denaturation product of XDI modified with trimethylolpropane (manufactured by Mitsui Chemicals & Polyurethanes Inc., under the trade name of "TAKENATE D-110N", the content ratio of isocyanate groups: 11.5% by mass) to obtain a polyisocyanate P-4. The viscosity of the resultant polyisocyanate P-4 at 25°C was 900 mPa•s, and the content ratio of isocyanate groups was 17.3% by mass.

<Preparation of polyisocyanate composition>

Example 1

(Preparation of polyisocyanate composition Pa-a1)

6.8 parts by mass of 2-hydroxyethane sulfonic acid tributylamine salt (HES /TBA) obtained in Synthesis Example 1 was added to 100 parts by mass of the polyisocyanate P-1 obtained in Synthesis Example 3 such that the molar equivalent ratio of isocyanate group / hydroxyl group became approximately 25, followed by stirring the mixture under reflux in a nitrogen atmosphere at 120°C for 3 hours to allow the reaction to proceed. Then, the reflux was stopped, and

the resultant was further stirred at 100°C for 1 hour to allow the reaction to further proceed. After the end of the reaction, the temperature was lowered to 50°C, and then 0.5 parts by mass of trilauryl phosphite (manufactured by JOHOKU CHEMICAL CO., LTD., under the trade name of "JP-312L") was added to the resultant, followed by stirring the mixture sufficiently to obtain a polyisocyanate composition PA-a1.

Example 2

(Preparation of polyisocyanate composition PA-a2)

A polyisocyanate composition PA-a2 was prepared by the same method as that of Example 1, except that the addition amount of JP-312L was 1.0 part by mass.

Example 3

(Preparation of polyisocyanate composition PA-a3)

6.8 parts by mass of 2-hydroxyethane sulfonic acid tributylamine salt (HES /TBA) obtained in Synthesis Example 1 was added to 100 parts by mass of the polyisocyanate P-1 obtained in Synthesis Example 3 such that the molar equivalent ratio of isocyanate group / hydroxyl group became approximately 25, followed by further adding 1.0 part by mass of trilauryl phosphite (manufactured by JOHOKU CHEMICAL CO., LTD., under the trade name of "JP-312L") thereto, and then stirring the mixture under reflux in a nitrogen atmosphere at 120°C for 3 hours to allow the reaction to proceed. Then, the reflux was stopped, and the resultant was further stirred at 100°C for 1 hour to allow the reaction to further proceed. After the end of the reaction, the temperature was lowered to 50°C to obtain a polyisocyanate composition PA-a3.

Example 4

(Preparation of polyisocyanate composition PA-a4)

A polyisocyanate composition PA-a4 was prepared by the same method as that of Example 1, except that the addition amount of JP-312L was 2.0 parts by mass.

Example 5

(Preparation of polyisocyanate composition PA-a5)

A polyisocyanate composition PA-a5 was prepared by the same method as that of Example 1, except that the addition amount of JP-312L was 4.0 parts by mass.

Example 6

(Preparation of polyisocyanate composition PA-a6)

7.2 parts by mass of 4-hydroxybenzenesulfonic acid dimethylcyclohexylamine (HBS / DMCHA) obtained in Synthesis Example 2 and 1.0 part by mass of tris(tridecyl) phosphite (manufactured by JOHOKU CHEMICAL CO., LTD., under the trade name of "JP-333E") were added to 100 parts by mass of the polyiocyanate P-2 obtained in Synthesis Example 4, such that the molar equivalent ratio of isocyanate group / hydroxyl group became approximately 20, followed by stirring the mixture under reflux in a nitrogen atmosphere at 120°C for 3 hours to allow the reaction to proceed. Then, the reflux was stopped, and the resultant was further stirred at 100°C for 1 hour to allow the reaction to further proceed. After the end of the reaction, the temperature was lowered to 50°C to obtain a polyisocyanate composition PA-a6.

Example 7

(Preparation of polyisocyanate composition PA-a7)

7.2 parts by mass of 4-hydroxybenzenesulfonic acid dimethylcyclohexylamine (HBS / DMCHA) obtained in Synthesis Example 2 was added to 100 parts by mass of the polyiocyanate P-2 obtained in Synthesis Example 4, such that the molar equivalent ratio of isocyanate group / hydroxyl group became approximately 20, followed by stirring the

mixture under reflux in a nitrogen atmosphere at 120°C for 3 hours to allow the reaction to proceed. Then, the reflux was stopped, and the resultant was further stirred at 100°C for 1 hour to allow the reaction to further proceed. After the end of the reaction, the temperature was lowered to 50°C, and 1.0 part by mass of tris(tridecyl) phosphite (manufactured by JOHOKU CHEMICAL CO., LTD., under the trade name of "JP-333E") was added to the resultant, followed by stirring the mixture sufficiently to obtain a polyisocyanate composition PA-a7.

Example 8

(Preparation of polyisocyanate composition PA-a8)

A polyisocyanate composition PA-a8 was prepared by the same method as that of Example 7, except that the addition amount of JP-333E was 3.0 parts by mass.

Example 9

(Preparation of polyisocyanate composition PA-a9)

A polyisocyanate composition PA-a9 was prepared by the same method as that of Example 7, except that the addition amount of JP-333E was 5.0 parts by mass.

Example 10

(Preparation of polyisocyanate composition PA-a10)

2.7 parts by mass of 2-hydroxyethane sulfonic acid (hereinafter, may be abbreviated as "HES") and 4.1 parts by mass of tributylamine (hereinafter, may be abbreviated as "TBA") were added to 100 parts by mass of the polyisocyanate P-1 obtained in Synthesis Example 3, such that the molar ratio of isocyanate groups to amino groups (isocyanate group / amino group) became approximately 25, followed by stirring the mixture under reflux in a nitrogen atmosphere at 100°C for 5 hours to allow the reaction to proceed. After the end of the reaction, the temperature was lowered to 50°C, and then 1.0 part by mass of trilauryl phosphite (manufactured by JOHOKU CHEMICAL CO., LTD., under the trade name of "JP-312L") was added to the resultant, followed by stirring the mixture sufficiently to obtain a polyisocyanate composition PA-a10.

Example 11

(Preparation of polyisocyanate composition PA-a11)

4.2 parts by mass of 4-hydroxybenzenesulfonic acid (hereinafter, may be abbreviated as "HBS") and 3.0 parts by mass of dimethylcyclohexylamine (hereinafter, may be abbreviated as "DMCHA") were added to 100 parts by mass of the polyiocyanate P-1 obtained in Synthesis Example 3, such that the molar ratio of isocyanate groups to amino groups (isocyanate group / amino group) became 20, followed by stirring the mixture under reflux in a nitrogen atmosphere at 100°C for 5 hours to allow the reaction to proceed. After the end of the reaction, the temperature was lowered to 50°C and 1.0 part by mass of tris(tridecyl) phosphite (manufactured by JOHOKU CHEMICAL CO., LTD., under the trade name of "JP-333E") was added to the resultant, followed by stirring the mixture sufficiently to obtain a polyisocyanate composition PA-a11.

Example 12

(Preparation of polyisocyanate composition PA-a12)

6.1 parts by mass of 3-cyclohexylaminopropanesulfonic acid (hereinafter, may be abbreviated as "CAPS") and 3.5 parts by mass of DMCHA were added to 100 parts by mass of the polyisocyanate P-1 obtained in Synthesis Example 3 such that the molar ratio of isocyanate groups to amino groups (isocyanate group / amino group) became 20, followed by stirring the mixture under reflux in a nitrogen atmosphere at 100°C for 5 hours to allow the reaction to proceed. After the end of the reaction, the temperature was lowered to 50°C, and then 0.5 parts by mass of diphenyl mono(2-ethylhexyl) phosphite (manufactured by JOHOKU CHEMICAL CO., LTD., under the trade name of "JPM-308") was added to the resultant, followed by stirring the mixture sufficiently to obtain a polyisocyanate composition PA-a12.

Example 13

(Preparation of polyisocyanate composition PA-a13)

A polyisocyanate composition PA-a13 was prepared by the same method as that of Example 12, except that the addition amount of JPM-308 was 1.0 part by mass.

Example 14

(Preparation of polyisocyanate composition PA-a14)

A polyisocyanate composition PA-a14 was prepared by the same method as that of Example 12, except that the addition amount of JPM-308 was 2.0 parts by mass.

Example 15

(Preparation of polyisocyanate composition PA-a15)

8.2 parts by mass of polyethylene glycol monomethyl ether in which the average number of ethylene oxide repeating units was 4.2, (manufactured by NIPPON NYUKAZAI CO., LTD., under the trade name of "MPG"), was added to 100 parts by mass of the polyisocyanate P-2 obtained in Synthesis Example 4, such that the molar equivalent ratio of isocyanate group / hydroxyl group became approximately 10, followed by stirring the mixture under a nitrogen atmosphere at 100°C for 4 hours to allow the reaction to proceed. After the end of the reaction, the temperature was lowered to 50°C, and then 0.5 parts by mass of JP-312L was added to the resultant, followed by stirring the mixture sufficiently to obtain a polyisocyanate composition PA-a15.

Example 16

(Preparation of polyisocyanate composition PA-a16)

A polyisocyanate composition PA-a16 was prepared by the same method as that of Example 15, except that the addition amount of JP-312L was 1.0 part by mass.

Example 17

(Preparation of polyisocyanate composition PA-a17)

A polyisocyanate composition PA-a17 was prepared by the same method as that of Example 15, except that the addition amount of JP-312L was 2.0 parts by mass.

Example 18

(Preparation of polyisocyanate composition PA-a18)

A polyisocyanate composition PA-a18 was prepared by the same method as that of Example 15, except that the addition amount of JP-312L was 4.0 parts by mass.

Example 19

(Preparation of polyisocyanate composition PA-a19)

A polyisocyanate composition PA-a19 was prepared by the same method as that of Example 1, except that 100 parts by mass of the polyisocyanate P-3 obtained in Synthesis Example 5 was used instead of 100 parts by mass of the polyisocyanate P-1 obtained in Synthesis Example 3, the addition amount of 2-hydroxyethane sulfonic acid tributylamine salt obtained in Synthesis Example 1 was 3.6 parts by mass, and the addition amount of JP-312L was 1.0 part by mass.

Example 20

(Preparation of polyisocyanate composition PA-a20)

A polyisocyanate composition PA-a20 was prepared by the same method as that of Example 1, except that 100 parts by mass of the polyisocyanate P-4 obtained in Synthesis Example 6 was used instead of 100 parts by mass of the polyisocyanate P-1 obtained in Synthesis Example 3, the addition amount of 2-hydroxyethane sulfonic acid tributylamine salt obtained in Synthesis Example 1 was 5.1 parts by mass, and the addition amount of JP-312L was 1.0 part by mass.

Example 21

(Preparation of polyisocyanate composition PA-a21)

A polyisocyanate composition PA-a21 was prepared by the same method as that of Example 1, except that 0.01 parts by mass of isotridecyl acid phosphate (manufactured by JOHOKU CHEMICAL CO., LTD., under the trade name of "JP-513") was added together with 0.5 parts by mass of JP-312L.

Example 22

(Preparation of polyisocyanate composition PA-a22)

A polyisocyanate composition PA-a22 was prepared by the same method as that of Example 2, except that 0.1 parts by mass of JP-513 was added together with 1.0 part by mass of JP-312L.

Example 23

(Preparation of polyisocyanate composition PA-a23)

A polyisocyanate composition PA-a23 was prepared by the same method as that of Example 4, except that 2.0 parts by mass of JP-513 was added together with 2.0 part by mass of JP-312L.

Example 24

(Preparation of polyisocyanate composition PA-a24)

A polyisocyanate composition PA-a24 was prepared by the same method as that of Example 7, except that 100 parts by mass of the polyisocyanate P-1 obtained in Synthesis Example 3 was used instead of the polyisocyanate P-2 obtained in Synthesis Example 4, and 0.02 parts by mass of 2-ethylhexyl acid phosphate (manufactured by JOHOKU CHEMICAL CO., LTD., under the trade name of "JP-508") was added together with 1.0 part by mass of JP-333E.

Example 25

(Preparation of polyisocyanate composition PA-a25)

A polyisocyanate composition PA-a25 was prepared by the same method as that of Example 8, except that 100 parts by mass of the polyisocyanate P-1 obtained in Synthesis Example 3 was used instead of the polyisocyanate P-2 obtained in Synthesis Example 4, and 0.2 parts by mass of JP-508 was added together with 3.0 parts by mass of JP-333E.

Example 26

(Preparation of polyisocyanate composition PA-a26)

A polyisocyanate composition PA-a26 was prepared by the same method as that of Example 9, except that 100 parts by mass of the polyisocyanate P-1 obtained in Synthesis Example 3 was used instead of the polyisocyanate P-2 obtained in Synthesis Example 4, and 2.0 parts by mass of JP-508 was added together with 5.0 parts by mass of JP-333E.

Example 27

(Preparation of polyisocyanate composition PA-a27)

4.3 parts by mass of 2-hydroxyethanesulfonic acid tributylamine salt (HES / TBA) obtained in Synthesis Example 1 and 3.8 parts by mass of 4-hydroxybenzenesulfonic acid dimethylcyclohexylamine (HBS / DMCHA) obtained in Synthesis Example 2 were added to 100 parts by mass of the polyisocyanate P-1 obtained in Synthesis Example 3, such that the molar equivalent ratio of isocyanate group / hydroxyl group became approximately 20, followed by stirring the mixture under reflux in a nitrogen atmosphere at 120°C for 3 hours to allow the reaction to proceed. Then, the reflux was stopped, and the resultant was further stirred at 100°C for 1 hour to allow the reaction to further proceed. After the end of the reaction, the temperature was lowered to 50°C, and then 1.0 part by mass of trilauryl phosphite (manufactured by JOHOKU CHEMICAL CO., LTD., under the trade name of "JP-312L") was added to the resultant, followed by stirring the mixture sufficiently to obtain a polyisocyanate composition PA-a27.

Example 28

(Preparation of polyisocyanate composition PA-a28)

4.3 parts by mass of 2-hydroxyethanesulfonic acid tributylamine salt (HES / TBA) obtained in Synthesis Example 1 and 2.2 parts by mass of MPG were added to 100 parts by mass of the polyisocyanate P-1 obtained in Synthesis Example 3, such that the molar equivalent ratio of isocyanate group / hydroxyl group became approximately 20, followed by stirring the mixture under reflux in a nitrogen atmosphere at 120°C for 3 hours to allow the reaction to proceed. Then, the reflux was stopped, and the resultant was further stirred at 100°C for 1 hour to allow the reaction to further proceed. After the end of the reaction, the temperature was lowered to 50°C, and then 1.0 part by mass of trilauryl phosphite (manufactured by JOHOKU CHEMICAL CO., LTD., under the trade name of "JP-312L") was added to the resultant, followed by stirring the mixture sufficiently to obtain a polyisocyanate composition PA-a28.

Example 29

(Preparation of polyisocyanate composition PA-a29)

4.3 parts by mass of 2-hydroxyethanesulfonic acid tributylamine salt (HES / TBA) obtained in Synthesis Example 1, 3.0 parts by mass of CAPS and 1.7 parts by mass of DMCHA were added to 100 parts by mass of the polyisocyanate obtained in Synthesis Example 3, such that the molar equivalent ratio of isocyanate group / hydroxyl group became approximately 20, followed by stirring the mixture under reflux in a nitrogen atmosphere at 120°C for 3 hours to allow the reaction to proceed. Then, the reflux was stopped, and the resultant was further stirred at 100°C for 1 hour to allow the reaction to further proceed. After the end of the reaction, the temperature was lowered to 50°C, and then 1.0 part by mass of trilauryl phosphite (manufactured by JOHOKU CHEMICAL CO., LTD., under the trade name of "JP-312L") was added to the resultant, followed by stirring the mixture sufficiently to obtain a polyisocyanate composition PA-a29.

Example 30

(Preparation of polyisocyanate composition PA-a30)

2.2 parts by mass of MPG, 3.0 parts by mass of CAPS and 1.7 parts by mass of DMCHA were added to 100 parts by mass of the polyisocyanate obtained in Synthesis Example 3, such that the molar equivalent ratio of isocyanate group / hydroxyl group became approximately 20, followed by stirring the mixture under reflux in a nitrogen atmosphere at 120°C for 3 hours to allow the reaction to proceed. Then, the reflux was stopped, and the resultant was further stirred at 100°C for 1 hour to allow the reaction to further proceed. After the end of the reaction, the temperature was lowered to 50°C, and then 1.0 part by mass of trilauryl phosphite (manufactured by JOHOKU CHEMICAL CO., LTD., under the trade name of "JP-312L") was added to the resultant, followed by stirring the mixture sufficiently to obtain a polyisocyanate composition PA-a30.

Comparative Example 1

(Preparation of polyisocyanate composition PA-b1)

6.8 parts by mass of 2-hydroxyethane sulfonic acid tributylamine salt (HES / TBA) obtained in Synthesis Example

1 was added to 100 parts by mass of the polyisocyanate P-1 obtained in Synthesis Example 3, such that the molar equivalent ratio of isocyanate group / hydroxyl group became approximately 25, followed by stirring the mixture under reflux in a nitrogen atmosphere at 120°C for 3 hours to allow the reaction to proceed. Then, the reflux was stopped, and the resultant was further stirred at 100°C for 1 hour to allow the reaction to further proceed, thereby obtaining a polyisocyanate composition PA-b1.

Comparative Example 2

(Preparation of polyisocyanate composition PA-b2)

7.2 parts by mass of 4-hydroxybenzenesulfonic acid dimethylcyclohexylamine (HBS / DMCHA) obtained in Synthesis Example 2 was added to 100 parts by mass of the polyisocyanate P-2 obtained in Synthesis Example 4, such that the molar equivalent ratio of isocyanate group / hydroxyl group became approximately 20, followed by stirring the mixture under reflux in a nitrogen atmosphere at 120°C for 3 hours to allow the reaction to proceed. Then, the reflux was stopped, and the resultant was further stirred at 100°C for 1 hour to allow the reaction to further proceed, thereby obtaining a polyisocyanate composition PA-b2.

Comparative Example 3

(Preparation of polyisocyanate composition PA-b3)

The polyisocyanate composition PA-b1 obtained in Comparative Example 1 was heated to 50°C, and then 8.0 parts by mass of JP-312L was added thereto, followed by stirring the mixture sufficiently to obtain a polyisocyanate composition PA-b3.

Comparative Example 4

(Preparation of polyisocyanate composition PA-b4)

The polyisocyanate composition PA-b2 obtained in Comparative Example 2 was heated to 50°C, and then 7.0 parts by mass of JP-333E was added thereto, followed by stirring the mixture sufficiently to obtain a polyisocyanate composition PA-b4.

Comparative Example 5

(Preparation of polyisocyanate composition PA-b5)

6.8 parts by mass of 2-hydroxyethane sulfonic acid tributylamine salt (HES / TBA) obtained in Synthesis Example 1 was added to 100 parts by mass of the polyisocyanate obtained in Synthesis Example 3, such that the molar equivalent ratio of isocyanate group / hydroxyl group became approximately 25, followed by stirring the mixture under reflux in a nitrogen atmosphere at 120°C for 3 hours to allow the reaction to proceed. Then, the reflux was stopped, and the resultant was further stirred at 100°C for 1 hour to allow the reaction to further proceed. After the end of the reaction, the temperature was lowered to 50°C, and 8.0 parts by mass of JP-312L and 8.0 parts by mass of JP-513 were added to the resultant, followed by stirring the mixture sufficiently to obtain a polyisocyanate composition PA-b5.

Comparative Example 6

(Preparation of polyisocyanate composition PA-b6)

8.2 parts by mass of polyethylene glycol monomethyl ether in which the average number of ethylene oxide repeating units was 4.2, (manufactured by NIPPON NYUKAZAI CO., LTD., under the trade name of "MPG"), was added to 100 parts by mass of the polyisocyanate P-2 obtained in Synthesis Example 4, such that the molar equivalent ratio of isocyanate group / hydroxyl group became approximately 10, followed by stirring the mixture in a nitrogen atmosphere at 100°C for 4 hours to allow the reaction to proceed. After the end of the reaction, the temperature was lowered to 50°C, and thus a polyisocyanate composition PA-b6 was obtained.

Comparative Example 7

(Preparation of polyisocyanate composition PA-b7)

8.2 parts by mass of polyethylene glycol monomethyl ether in which the average number of ethylene oxide repeating units was 4.2, (manufactured by NIPPON NYUKAZAI CO., LTD., under the trade name of "MPG"), was added to 100 parts by mass of the polyisocyanate P-2 obtained in Synthesis Example 4, such that the molar equivalent ratio of isocyanate group / hydroxyl group became approximately 10, followed by stirring the mixture in a nitrogen atmosphere at 100°C for 4 hours to allow the reaction to proceed. After the end of the reaction, the temperature was lowered to 50°C, and then 7.0 parts by mass of JP-312L was added to the resultant, followed by stirring the mixture sufficiently to obtain a polyisocyanate composition PA-b5.

Physical properties of the polyisocyanate compositions obtained in the examples and comparative examples were measured by the above-mentioned methods. Results are shown in Tables 9 to 16. In addition, the polyisocyanate compositions obtained in the examples and comparative examples were evaluated by the above-mentioned methods. Results are shown in Tables 9 to 16.

Table 1

| Example | | | | | 1 | 2 | 3 | 4 | 5 |
|---|---|---|---|---|---|---|---|---|---|
| Polyisocyanate composition | | | | | PA-a1 | PA-a2 | PA-a3 | PA-a4 | PA-a5 |
| Constitution | Hydrophilic polyisocyanate compound | Polyisocyanate | | Type | P-1 | P-1 | P-1 | P-1 | P-1 |
| | | | | Amount (part by mass) | 100 | 100 | 100 | 100 | 100 |
| | | Hydrophilic compound | Amine sulfonate | Type | HES/TBA | HES/TBA | HES/TBA | HES/TBA | HES/TBA |
| | | | | Amount (part by mass) | 6.8 | 6.8 | 6.8 | 6.8 | 6.8 |
| | | | Sulfonic acid and amine compound | Type | | | | | |
| | | | | Amount (part by mass) | | | | | |
| | | | Nonionic compound | Type | | | | | |
| | | | | Amount (part by mass) | | | | | |
| | Phosphite ester compound (Amount: part by mass) | | | JP-312L | 0.5 | 1.0 | 1.0 | 2.0 | 4.0 |
| | | | | JP-333E | | | | | |
| | | | | JPM-308 | | | | | |
| | Acidic phosphoric acid ester compound (Amount: part by mass) | | | JP-513 | | | | | |
| | | | | JP-508 | | | | | |

Table 2

| Example | | | | | 6 | 7 | 8 | 9 | 10 |
|---|---|---|---|---|---|---|---|---|---|
| Polyisocyanate composition | | | | | PA-a6 | PA-a7 | PA-a8 | PA-a9 | PA-a10 |
| Constitution | Hydrophilic polyisocyanate compound | Polyisocyanate | | Type | P-2 | P-2 | P-2 | P-2 | P-1 |
| | | | | Amount (part by mass) | 100 | 100 | 100 | 100 | 100 |
| | | Hydrophilic compound | Amine sulfonate | Type | HBS/ DMCHA | HBS/ DMCHA | HBS/ DMCHA | HBS/ DMCHA | |
| | | | | Amount (part by mass) | 7.2 | 7.2 | 7.2 | 7.2 | |
| | | | Sulfonic acid and amine compound | Type | | | | | HES |
| | | | | | | | | | TBA |
| | | | | Amount (part by mass) | | | | | 2.7 |
| | | | | | | | | | 4.1 |
| | | | Nonionic compound | Type | | | | | |
| | | | | Amount (part by mass) | | | | | |
| | Phosphite ester compound (Amount: part by mass) | | | JP-312L | | | | | 1.0 |
| | | | | JP-333E | 1.0 | 1.0 | 3.0 | 5.0 | |
| | | | | JPM-308 | | | | | |
| | Acidic phosphoric acid ester compound (Amount: part by mass) | | | JP-513 | | | | | |
| | | | | JP-508 | | | | | |

Table 3

| Example | | 11 | 12 | 13 | 14 | 15 |
|---|---|---|---|---|---|---|
| Polyisocyanate composition | | PA-a11 | PA-a12 | PA-a13 | PA-a14 | PA-a15 |
| Constitution / Hydrophilic polyisocyanate compound / Polyisocyanate | Type | P-2 | P-1 | P-1 | P-1 | P-2 |
| | Amount (part by mass) | 100 | 100 | 100 | 100 | 100 |
| Constitution / Hydrophilic polyisocyanate compound / Hydrophilic compound / Amine sulfonate | Type | | | | | |
| | Amount (part by mass) | | | | | |
| Constitution / Hydrophilic polyisocyanate compound / Hydrophilic compound / Sulfonic acid and amine compound | Type | HBS | CAPS | CAPS | CAPS | |
| | | DMCHA | DMCHA | DMCHA | DMCHA | |
| | Amount (part by mass) | 3.2 | 6.1 | 6.1 | 6.1 | |
| | | 4.0 | 3.5 | 3.5 | 3.5 | |
| Constitution / Hydrophilic polyisocyanate compound / Hydrophilic compound / Nonionic compound | Type | | | | | MPG |
| | Amount (part by mass) | | | | | 8.2 |
| Constitution / Phosphite ester compound (Amount: part by mass) | JP-312L | | | | | 0.5 |
| | JP-333E | 1.0 | | | | |
| | JPM-308 | | 0.5 | 1.0 | 2.0 | |
| Constitution / Acidic phosphoric acid ester compound (Amount: part by mass) | JP-513 | | | | | |
| | JP-508 | | | | | |

Table 4

| Example | | | | 16 | 17 | 18 | 19 | 20 |
|---|---|---|---|---|---|---|---|---|
| Polyisocyanate composition | | | | PA-a16 | PA-a17 | PA-a18 | PA-a19 | PA-a20 |
| Constitution | Hydrophilic polyisocyanate compound | Polyisocyanate | Type | P-2 | P-2 | P-2 | P-3 | P-4 |
| | | | Amount (part by mass) | 100 | 100 | 100 | 100 | 100 |
| | | Hydrophilic compound: Amine sulfonate | Type | | | | HES/ TBA | HES/ TBA |
| | | | Amount (part by mass) | | | | 3.6 | 5.1 |
| | | Hydrophilic compound: Sulfonic acid and amine compound | Type | | | | | |
| | | | | | | | | |
| | | | Amount (part by mass) | | | | | |
| | | | | | | | | |
| | | Hydrophilic compound: Nonionic compound | Type | MPG | MPG | MPG | | |
| | | | Amount (part by mass) | 8.2 | 8.2 | 8.2 | | |
| | Phosphite ester compound (Amount: part by mass) | | JP-312L | 1.0 | 2.0 | 4.0 | 1.0 | 1.0 |
| | | | JP-333E | | | | | |
| | | | JPM-308 | | | | | |
| | Acidic phosphoric acid ester compound (Amount: part by mass) | | JP-513 | | | | | |
| | | | JP-508 | | | | | |

Table 5

| Example | | | | | 21 | 22 | 23 | 24 | 25 |
|---|---|---|---|---|---|---|---|---|---|
| Polyisocyanate composition | | | | | PA-a21 | PA-a22 | PA-a23 | PA-a24 | PA-a25 |
| Constitution | Hydrophilic polyisocyanate compound | Polyiso-cyanate | | Type | P-1 | P-1 | P-1 | P-1 | P-1 |
| | | | | Amount (part by mass) | 100 | 100 | 100 | 100 | 100 |
| | | Hydrophilic compound | Amine sulfonate | Type | HES/ TBA | HES/ TBA | HES/ TBA | HBS/ DMCHA | HBS/ DMCHA |
| | | | | Amount (part by mass) | 6.8 | 6.8 | 6.8 | 7.2 | 7.2 |
| | | | Sulfonic acid and amine compound | Type | | | | | |
| | | | | | | | | | |
| | | | | Amount (part by mass) | | | | | |
| | | | | | | | | | |
| | | | Nonionic compound | Type | | | | | |
| | | | | Amount (part by mass) | | | | | |
| | Phosphite ester compound (Amount: part by mass) | | | JP-312L | 0.5 | 1.0 | 2.0 | | |
| | | | | JP-333E | | | | 1.0 | 3.0 |
| | | | | JPM-308 | | | | | |
| | Acidic phosphoric acid ester compound (Amount: part by mass) | | | JP-513 | 0.01 | 0.1 | 2.0 | | |
| | | | | JP-508 | | | | 0.02 | 0.2 |

Table 6

| Example | | | | 26 | 27 | 28 | 29 | 30 |
|---|---|---|---|---|---|---|---|---|
| Polyisocyanate composition | | | | PA-a26 | PA-a27 | PA-a28 | PA-a29 | PA-a30 |
| Constitution | Hydrophilic polyisocyanate compound | Polyisocyanate | Type | P-1 | P-1 | P-1 | P-1 | P-1 |
| | | | Amount (part by mass) | 100 | 100 | 100 | 100 | 100 |
| | Hydrophilic compound | Amine sulfonate | Type | HBS/DMCHA | HES/TBA | HES/TBA | HES/TBA | |
| | | | | | HBS/DMCHA | | | |
| | | | Amount (part by mass) | 6.8 | 4.3 | 4.3 | 4.3 | |
| | | | | | 3.8 | | | |
| | | Sulfonic acid and amine compound | Type | | | | CAPS | CAPS |
| | | | | | | | DMCHA | DMCHA |
| | | | Amount (part by mass) | | | | 3.0 | 3.0 |
| | | | | | | | 1.7 | 1.7 |
| | | Nonionic compound | Type | | | MPG | | MPG |
| | | | Amount (part by mass) | | | 2.2 | | 2.2 |
| | Phosphite ester compound (Amount: part by mass) | | JP-312L | | 1.0 | 1.0 | 1.0 | 1.0 |
| | | | JP-333E | 5.0 | | | | |
| | | | JPM-308 | | | | | |
| | Acidic phosphoric acid ester compound (Amount: part by mass) | | JP-513 | | | | | |
| | | | JP-508 | 2.0 | | | | |

Table 7

| Comparative Example | | | | 1 | 2 | 3 | 4 | 5 |
|---|---|---|---|---|---|---|---|---|
| Polyisocyanate composition | | | | PA-b1 | PA-b2 | PA-b3 | PA-b4 | PA-b5 |
| Constitution | Hydrophilic polyisocyanate compound | Polyisocyanate | Type | P-1 | P-2 | P-1 | P-2 | P-1 |
| | | | Amount (part by mass) | 100 | 100 | 100 | 100 | 100 |
| | | Hydrophilic compound: Amine sulfonate | Type | HES/TBA | HBS/DMCHA | HES/TBA | HBS/DMCHA | HES/TBA |
| | | | Amount (part by mass) | 6.8 | 7.2 | 6.8 | 7.2 | 6.8 |
| | | Hydrophilic compound: Sulfonic acid and amine compound | Type | | | | | |
| | | | Amount (part by mass) | | | | | |
| | | Hydrophilic compound: Nonionic compound | Type | | | | | |
| | | | Amount (part by mass) | | | | | |
| | Phosphite ester compound (Amount: part by mass) | | JP-312L | | | 8.0 | | 8.0 |
| | | | JP-333E | | | | 7.0 | |
| | | | JPM-308 | | | | | |
| | Acidic phosphoric acid ester compound (Amount: part by mass) | | JP-513 | | | | | 8.0 |
| | | | JP-508 | | | | | |

Table 8

| Comparative Example | | | | | 6 | 7 |
|---|---|---|---|---|---|---|
| Polyisocyanate composition | | | | | PA-b6 | PA-b7 |
| Constitution | Hydrophilic polyisocyanate compound | Polyisocyanate | | Type | P-1 | P-2 |
| | | | | Amount (part by mass) | 100 | 100 |
| | | Hydrophilic compound | Amine sulfonate | Type | | |
| | | | | Amount (part by mass) | | |
| | | | Sulfonic acid and amine compound | Type | | |
| | | | | | | |
| | | | | Amount (part by mass) | | |
| | | | | | | |
| | | | Nonionic compound | Type | MPG | MPG |
| | | | | Amount (part by mass) | 8.2 | 8.2 |
| | Phosphite ester compound (Amount: part by mass) | | | JP-312L | | 7.0 |
| | | | | JP-333E | | |
| | | | | JPM-308 | | |
| | Acidic phosphoric acid ester compound (Amount: part by mass) | | | JP-513 | | |
| | | | | JP-508 | | |

Table 9

| Example | | | 1 | 2 | 3 | 4 | 5 |
|---|---|---|---|---|---|---|---|
| Physical property | Content ratio of NCO groups | (% by mass) | 19.3 | 19.2 | 19.2 | 19.1 | 18.7 |
| | Non-volatile content | (% by mass) | 99.5 | 99.5 | 99.5 | 99.5 | 99.9 |
| Evaluation | APHA | | 20 | 20 | 20 | 18 | 18 |
| | Turbidity (transmittance) T550% | | 95% | 95% | 96% | 96% | 96% |
| | Pot life | | ○ | ○ | ○ | ○ | ○ |
| | Water-resistance of coating film | | ○ | ○ | ○ | ○ | △ |
| | Surface- hardness of coating film | | ○ | ○ | ○ | ○ | △ |

Table 10

| Example | | | 6 | 7 | 8 | 9 | 10 |
|---|---|---|---|---|---|---|---|
| Physical property | Content ratio of NCO groups | (% by mass) | 17.8 | 17.8 | 17.4 | 17.1 | 19.2 |
| | Non-volatile content | (% by mass) | 99.9 | 99.9 | 99.9 | 99.9 | 99.5 |
| Evaluation | APHA | | 16 | 16 | 16 | 15 | 20 |
| | Turbidity (transmittance) T550% | | 96% | 96% | 96% | 95% | 95% |
| | Pot life | | ○ | ○ | ○ | ○ | ○ |
| | Water-resistance of coating film | | ○ | ○ | ○ | △ | △ |
| | Surface-hardness of coating film | | ○ | ○ | ○ | ○ | ○ |

Table 11

| Example | | | 11 | 12 | 13 | 14 | 15 |
|---|---|---|---|---|---|---|---|
| Physical property | Content ratio of NCO groups | (% by mass) | 17.8 | 18.2 | 18.1 | 17.9 | 16.6 |
| | Non-volatile content | (% by mass) | 99.9 | 99.8 | 99.8 | 99.8 | 99.4 |
| Evaluation | APHA | | 16 | 22 | 23 | 24 | 25 |
| | Turbidity (transmittance) T550% | | 96% | 94% | 95% | 95% | 93% |
| | Pot life | | ○ | ○ | ○ | ○ | ○ |
| | Water-resistance of coating film | | △ | △ | △ | △ | △ |
| | Surface- hardness of coating film | | ○ | ○ | ○ | ○ | △ |

Table 12

| Example | | | 16 | 17 | 18 | 19 | 20 |
|---|---|---|---|---|---|---|---|
| Physical property | Content ratio of NCO groups | (% by mass) | 16.5 | 16.4 | 16.1 | 10.7 | 14.9 |
| | Non-volatile content | (% by mass) | 99.4 | 99.4 | 99.5 | 99.4 | 99.5 |
| Evaluation | APHA | | 25 | 26 | 26 | 25 | 25 |
| | Turbidity (transmittance) T550% | | 93% | 94% | 94% | 94% | 94% |
| | Pot life | | ○ | ○ | ○ | ○ | ○ |
| | Water-resistance of coating film | | △ | △ | △ | ○ | ○ |
| | Surface- hardness of coating film | | △ | △ | △ | ○ | ○ |

Table 13

| Example | | | 21 | 22 | 23 | 24 | 25 |
|---|---|---|---|---|---|---|---|
| Physical property | Content ratio of NCO groups | (% by mass) | 18.1 | 18.0 | 17.6 | 17.8 | 17.4 |
| | Non-volatile content | (% by mass) | 99.5 | 99.5 | 99.5 | 99.9 | 99.5 |

(continued)

| Example | | | 21 | 22 | 23 | 24 | 25 |
|---|---|---|---|---|---|---|---|
| Evaluation | APHA | | 20 | 20 | 18 | 16 | 16 |
| | Turbidity (transmittance) T550% | | 98% | 98% | 99% | 96% | 96% |
| | Pot life | | ○ | ○ | △ | ○ | ○ |
| | Water-resistance of coating film | | ○ | ○ | △ | ○ | ○ |
| | Surface- hardness of coating film | | ○ | ○ | △ | ○ | ○ |

Table 14

| Example | | | 26 | 27 | 28 | 29 | 30 |
|---|---|---|---|---|---|---|---|
| Physical property | Content ratio of NCO groups | (% by mass) | 16.8 | 18.6 | 19.2 | 18.3 | 19.0 |
| | Non-volatile content | (% by mass) | 99.4 | 99.5 | 99.6 | 99.5 | 99.8 |
| Evaluation | APHA | | 15 | 20 | 26 | 24 | 25 |
| | Turbidity (transmittance) T550% | | 95% | 95% | 94% | 95% | 94% |
| | Pot life | | ○ | ○ | ○ | ○ | ○ |
| | Water-resistance of coating film | | △ | ○ | △ | ○ | △ |
| | Surface-hardness of coating film | | ○ | ○ | ○ | ○ | ○ |

Table 15

| Comparative Example | | | 1 | 2 | 3 | 4 | 5 |
|---|---|---|---|---|---|---|---|
| Physical property | Content ratio of NCO groups | (% by mass) | 19.4 | 17.9 | 18.1 | 16.8 | 16.9 |
| | Non-volatile content | (% by mass) | 99.4 | 99.4 | 99.4 | 99.5 | 99.4 |
| Evaluation | APHA | | 45 | 51 | 28 | 28 | 27 |
| | Turbidity (transmittance) T550% | | 93% | 93% | 94% | 94% | 94% |
| | Pot life | | ○ | ○ | × | × | × |
| | Water-resistance of coating film | | ○ | ○ | × | × | × |
| | Surface- hardness of coating film | | ○ | ○ | × | × | × |

Table 16

| Comparative Example | | | 6 | 7 |
|---|---|---|---|---|
| Physical property | Content ratio of NCO groups | (% by mass) | 17.8 | 16.7 |
| | Non-volatile content | (% by mass) | 99.5 | 99.5 |
| Evaluation | APHA | | 48 | 30 |
| | Turbidity (transmittance) T550% | | 94% | 94% |
| | Pot life | | ○ | △ |
| | Water-resistance of coating film | | △ | ○ |
| | Surface-hardness of coating film | | △ | × |

As shown in the results, the polyisocyanate composition according to the present invention had excellent

transparency, low coloring, excellent pot life when made into a coating composition, and excellent hardness and water-resistance when made into a coating film.

INDUSTRIAL APPLICABILITY

The polyisocyanate composition according to the present invention has excellent transparency, low coloring, excellent pot life when made into a coating composition, and excellent hardness and water-resistance when made into a coating film, and therefore is extremely useful industrially. The coating composition according to the present invention contains the polyisocyanate composition, has excellent pot life and exhibits excellent hardness and water-resistance when made into a coating film, and the coated substrate according to the present invention has a coating film formed by curing the coating composition, the coating film having excellent hardness and water-resistance, and therefore are extremely useful industrially.

## Claims

1. A polyisocyanate composition comprising:

   a hydrophilic polyisocyanate compound (A) derived from both a polyisocyanate compound derived from at least one diisocyanate selected from the group consisting of aliphatic diisocyanates, alicyclic diisocyanates and aromatic diisocyanates, and a hydrophilic compound; and
   a phosphite ester compound (B),
   wherein an amount of the phosphite ester compound (B) is 0.0001 parts by mass to 5.0 parts by mass relative to 100 parts by mass of the polyisocyanate compound.

2. The polyisocyanate composition according to claim 1, wherein the phosphite ester compound (B) is a compound of general formula (I):

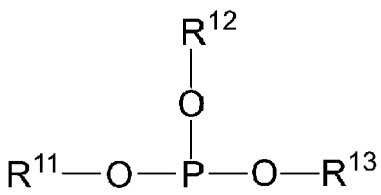

(I)

   in the general formula (I), $R^{11}$, $R^{12}$ and $R^{13}$ are each independently a C1-20 alkyl group or a C6-10 aryl group.

3. The polyisocyanate composition according to claim 1 or 2, further comprising an acidic phosphoric acid ester compound.

4. The polyisocyanate composition according to claim 3, wherein the acidic phosphoric acid ester compound is a compound of general formula (II):

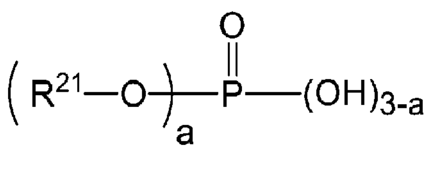

(II)

   in the general formula (II), $R^{21}$ is a C1-20 alkyl group or a C6-10 aryl group, and a is 1 to 2.

5. The polyisocyanate composition according to claim 3 or 4, wherein an amount of the acidic phosphoric acid ester compound is 0.0001 parts by mass to 5.0 parts by mass relative to 100 parts by mass of the polyisocyanate compound.

6. The polyisocyanate composition according to any one of claims 1 to 5, wherein the hydrophilic compound is at least one compound selected from the group consisting of anionic compounds, cationic compounds and nonionic compounds.

7. The polyisocyanate composition according to claim 6, wherein the hydrophilic compound comprises an anionic compound, and
the anionic compound is at least one compound selected from the group consisting of carboxylic acid group-containing compounds, phosphoric acid group-containing compounds and sulfonic acid group-containing compounds.

8. The polyisocyanate composition according to claim 7, wherein the anionic compound comprises a sulfonic acid group-containing compound, and
the sulfonic acid group-containing compound is a sulfonic acid having an active hydrogen group.

9. The polyisocyanate composition according to claim 8, wherein the active hydrogen group is a hydroxyl group.

10. The polyisocyanate composition according to claim 8 or 9, wherein the sulfonic acid having an active hydrogen group is a compound of the following general formula (III):

$$HO-R^{31}-SO_3H \qquad (III)$$

in the general formula (III), $R^{31}$ is a C1-10 hydrocarbon group which may have at least one selected from the group consisting of an ether linkage, an ester linkage, a carbonyl group and an imino group, $R^{31}$ may have a ring structure, and the ring structure is an aromatic ring, a 5- or 6-membered ring having two nitrogen atoms or a 5- or 6-membered ring having both a nitrogen atom and an oxygen atom.

11. The polyisocyanate composition according to any one of claims 7 to 10, wherein a carboxylic acid group, a phosphoric acid group or a sulfonic acid group of the anionic compound is neutralized by an inorganic base or an organic amine compound.

12. The polyisocyanate composition according to claim 6, wherein the hydrophilic compound comprises a nonionic compound, and

the nonionic compound is a polyalkylene glycol alkyl ether having a structure of general formula (IV):

$$HO-\left(R^{41}O\right)_n-R^{42} \qquad (IV)$$

in the general formula (IV), $R^{41}$ is a C1-4 alkylene group, and $R^{42}$ is a C1-4 alkyl group, and n is 4.0 to 20.

13. Use of a polyisocyanate composition of any one of claims 1 to 12 as a curing agent of a polyurethane resin composition.

14. A coating composition comprising a polyisocyanate composition of any one of claims 1 to 12.

15. A coated substrate coated with a coating composition of claim 14.

16. A preparation method of a polyisocyanate composition of any one of claim 1 to 12, comprising:

a step (1) in which a polyisocyanate compound derived from at least one diisocyanate selected from the group consisting of aliphatic diisocyanates, alicyclic diisocyanates and aromatic diisocyanates and a hydrophilic compound are reacted in a presence of a phosphite ester compound (B) to obtain a hydrophilic polyisocyanate compound (A), or
a step (2) in which a polyisocyanate compound derived from at least one diisocyanate selected from the group consisting of aliphatic diisocyanates, alicyclic diisocyanates and aromatic diisocyanates and a hydrophilic compound are reacted to obtain a hydrophilic polyisocyanate compound (A), followed by mixing the hydrophilic polyisocyanate compound (A) with a phosphite ester compound (B),
wherein no step in which an acidic group derived from the hydrophilic compound is neutralized is conducted

after the polyisocyanate compound and the hydrophilic compound are reacted in the step (1) or (2).

Europäisches Patentamt
European Patent Office
Office européen des brevets

# EUROPEAN SEARCH REPORT

Application Number
EP 22 16 4035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 015 552 A1 (ASAHI CHEMICAL IND [JP]) 22 June 2022 (2022-06-22) * paragraphs [0001], [0008], [0009], [0049], [0054], [0186]; example 12; table 3 * | 1,2,6-16 | INV. C08G18/02 C08G18/08 C08G18/18 C08G18/28 C08G18/62 C08G18/73 C08G18/75 C08G18/79 C08G18/80 C09D175/04 |
| X | EP 3 527 595 A1 (ASAHI CHEMICAL IND [JP]) 21 August 2019 (2019-08-21) * paragraphs [0001], [0015], [0056], [0095] - [0098]; claims; examples (2-1) - (2-10); tables 8, 9, 10 * | 1-16 | |
| A | JP 2020 122105 A (ASAHI KASEI CORP) 13 August 2020 (2020-08-13) * paragraphs [0001], [0007] - [0008], [0011], [0026], [0085]; claims; examples * | 1-16 | |
| A | EP 3 517 559 A1 (ASAHI CHEMICAL IND [JP]) 31 July 2019 (2019-07-31) * paragraphs [0001], [0011], [0016] - [0017], [0033], [0201]; claims; examples * | 1-16 | TECHNICAL FIELDS SEARCHED (IPC) C08G C09D |

The present search report has been drawn up for all claims

2

| Place of search | Date of completion of the search | Examiner |
|---|---|---|
| Munich | 17 August 2022 | Eigner, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 16 4035

This annex lists the patent family members relating to the patent documents cited in the above-mentioned European search report. The members are as contained in the European Patent Office EDP file on
The European Patent Office is in no way liable for these particulars which are merely given for the purpose of information.

17-08-2022

| Patent document cited in search report | | Publication date | Patent family member(s) | | | Publication date |
|---|---|---|---|---|---|---|
| EP 4015552 | A1 | 22-06-2022 | NONE | | | |
| EP 3527595 | A1 | 21-08-2019 | CN | 109843953 | A | 04-06-2019 |
| | | | EP | 3527595 | A1 | 21-08-2019 |
| | | | EP | 3686229 | A1 | 29-07-2020 |
| | | | JP | 6626985 | B2 | 25-12-2019 |
| | | | JP | WO2018070532 | A1 | 24-06-2019 |
| | | | WO | 2018070532 | A1 | 19-04-2018 |
| JP 2020122105 | A | 13-08-2020 | NONE | | | |
| EP 3517559 | A1 | 31-07-2019 | CN | 109790277 | A | 21-05-2019 |
| | | | EP | 3517559 | A1 | 31-07-2019 |
| | | | JP | 6633218 | B2 | 22-01-2020 |
| | | | JP | WO2018056408 | A1 | 11-04-2019 |
| | | | WO | 2018056408 | A1 | 29-03-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI05222150 A
- JP HEI09328654 A
- JP 2015205957 A
- JP 2016017157 A
- JP 2019189866 A